# EUROPÄISCHE PATENTANMELDUNG

(11) **EP 1 329 541 A2**
(43) Veröffentlichungstag der Anmeldung: **23.07.2003**
(21) Anmeldenummer: 03006664.1
(22) Anmeldetag: 12.05.1999
(51) Int. Cl.: D01G 19/14, D01G 21/00, D01H 5/00

(54) **Textilverarbeitende Maschine mit einem Streckwerk**

(30) Priorität: 13.05.1998 CH 106398; 29.05.1998 CH 118298
(62) Teilanmeldung aus: 99920514.9
(71) Anmelder: MASCHINENFABRIK RIETER AG, 8406 Winterthur (CH)
(72) Erfinder: Slavik, Walter, 8320 Fehraltorf (CH); Pietrini, Viktor, 8372 Wiezikon b. Sirnach (CH)

(57) **Zusammenfassung**

Eine Kämmaschine (K) mit wenigstens einer Faserbandbildenden Einrichtung (209, 41) und einer Bandablage (42, KA) wird mit einem Streckwerk (2,110, 213) dadurch versehen, indem zumindest die Bandablage (42, KA) durch eine Baugruppe einer Strecke (1,S) zum Doublieren und Verstrecken von Faserbändern (40,F,52, 130) gebildet wird, wobei die Baugruppe (1,S) auch das Streckwerk (2,213) der Strecke umfasst.

## Beschreibung

Die Erfindung bezieht sich auf eine Textilmaterial verarbeitende Maschine mit wenigstens einer Faserbandbildenden Einrichtung und einer Bandablage und wenigstens einem Streckwerk zwischen der Bandbildenden Einrichtung und der Bandablage (Kannenpresse, Kannenstock).,

Solche Anordnungen sind z.B. aus EP-A-376 002, EP-B-640 704, EP-A-799 916, DE-A-195 09 781, DE-A-197 21 758, DE-A-296 22 923 und US 3,402,433 bekannt. Es ist zu Beispiel bekannt, eine Kämmaschine mit einem geregelten Streckwerk zu versehen, wie z.B. aus der vorerwähnten Schrift EP-A-376 002 ersichtlich ist. Desweiteren ist aus der zitierten DE-A-197 21 758 eine Vorrichtung zu entnehmen, wobei eine Karde einen Antrieb für die bandliefernden Elemente und die Strecke bzw. die Bandablage aufweisen kann.

Ebenfalls bekannt sind sogenannte Strecken zum Doublieren und Verstrecken von Faserbändern, die durch Karden bzw. Kämmaschinen hergestellt werden können. Die wesentliche Baugruppe einer solchen Maschine ist das Streckwerk. Beispiele solcher Strecken sind in DE-A-195 48 840, EP-A-608 502, DE-A-44 24 490 und DE-A-41 42 038 zu finden. Das "Doublieren" bedeutet, dass solche Maschinen zum Einziehen und Verarbeiten von mehreren Faserbändern (z.B. sechs oder acht Bändern) konzipiert sind, wobei der Gesamtverzug des Streckwerkes normalerweise der Anzahl der einlaufenden Faserbändern angepasst ist.

Die vorliegende Erfindung sieht eine Textilmaterial verarbeitende Maschine mit einem Streckwerk und einer Bandablage vor, wobei das Streckwerk durch eine Baugruppe einer Strecke für das Doublieren und Verstrecken von mehreren Faserbändern gebildet ist. Sofern es sich bei der Textilmaschine um eine Karde handelt, wird in diesem Fall nur ein (oder höchstens zwei Faserbänder im Fall eines Kardenpaares) der Strecke zugeführt.

Damit wird die Integration einer bisher autonom arbeitenden Strecke an einer ebenfalls bisher autonom arbeitenden Textilmaterial verarbeitenden Maschine, wie z.B. Karde oder Kämmaschine vorgeschlagen
Bei weiteren Variante, z.B. bei Anwendung an einer Kämmaschine wird zwischen einem ersten, der Maschine zugeordneten Streckwerk und der Bandablage ein weiteres Streckwerk in der Form einer Baugruppe einer Strecke zum Doublieren und Verstrekken von mehreren Faserbändern eingeschaltet, obwohl die Kämmaschine in diesem Fall samt des ihr zugeordneten Streckwerkes nur ein Faserband liefert. Die Bedienungseinrichtungen der beiden, miteinander zusammenarbeitenden Maschinen sind vorzugsweise aneinander angepasst, um vermeidbare Umwege des Bedienungspersonal zu eliminieren. Dies kann eine Anpassung der Materialflussrichtung der einen oder der anderen Maschine erfordern.

Das der Baugruppe zugeornete Streckwerk kann mit der normalen Infrastruktur der Strecke versehen werden, z.B. das Gestell und die Antriebs- bzw. Bedienungseinrichtungen. Das Kannengatter der konventionellen Strecke kann durch eine Übergabeeinrichtung ersetzt werden, welche das von der Textilmaterial verarbeitenden Maschine (kurz: Textilmaschine genannt) gelieferte Fasermaterial an das weitere Streckwerk weiterleitet.

Ein modernes Antriebssystem für eine Textilmaschine beruht auf der Frequenzumformertechnik - siehe zum Beispiel "Drehstrommotoren mit Frequenzumrichtern für Textilmaschinen" (Textil Praxis International 1992, Januar, Seite 37,38).
Ein solcher Antrieb ist z.B. für eine Karde in der DD-A-224626 gezeigt, wobei in dem Fall mehrere Umrichter (Einzelumrichter) verwendet werden. Gemäss EP-A-671 355 stellte es sich heraus, dass solche Antriebssysteme erweitert werden können, um die Bandablage miteinzubeziehen, obwohl in der Bandstrecke zwischen der Maschine und der Bandablage Fehlverzüge besonders leicht erzeugt werden können.

Gemäss einer Ausführung dieser Erfindung weist das Streckwerk in der ersten Variante einen vorgegebenen (allenfalls einstellbaren) Verzug auf, wobei sowohl der Antrieb für die Textilmaschine, wie auch der Antrieb für das Streckwerk mindestens je einen frequenzgesteuerten Drehstrommotor aufweisen. Dabei ist zum Speisen dieser Motoren ein gemeinsamer Frequenzumrichter oder ein Frequenzumrichterpaar vorgesehen, wobei die Umrichter eines Paares miteinander gekoppelt sind, um die gleiche Ausgangsfrequenz bzw. Ausgangsfrequenzen in einem vorgebbaren Verhältnis vorzuweisen. Die Drehstrommotoren sind können vorzugsweise Asynchronmotoren sein, d.h. Motoren, die wegen Schlupf eine lastabhängige Drehzahlcharakteristik bei konstanter Speisefrequenz aufweisen. Eine solche Charakteristik ist (trotz des Risikos eines Fehlverzuges) deshalb verwendbar, weil es sich herausstellt, dass die zu erwartenden Laständerungen im Betrieb derart ähnliche Verhaltensweisen an den massgebenden Stellen aufweisen, dass die Differenz der relativen Drehzahlfehler (d.h. der Drehzahlunterschied gegenüber den Synchrondrehzahlen) in der Praxis innerhalb sehr engen Grenzen (akzeptablen Toleranzen) bleibt.

Es kann dementsprechend ein Antriebssystem für eine Faserbandherstellende und weiterverarbeitende Textilmaschine vorgesehen werden, wobei sowohl die bandliefernden Elemente wie auch die verarbeitenden Elemente durch Motoren angetrieben werden, die eine lastabhängige Drehzahlcharakteristik aufweisen. Das Antriebssystem umfasst vorzugsweise eine Motorensteuerung, die derart ausgelegt ist, dass allfälliger, im Betrieb entstehender Motorenschlupf innerhalb vorgebbaren Grenzen bleibt. Die Steuerung weist vorzugsweise einen steuerbaren Leistungsteil auf, welcher die genannten Motoren speist. Der Leistungsteil ist vorzugsweise bezüglich der Frequenz der dadurch gelieferten elektrischen Energie steuerbar, er umfasst zum Beispiel mindestens einen Frequenzumrichter, und die genannten Motoren sind dann vorzugsweise über die Speisefrequenz steuerbare Motoren.
Aus Kostengründen wird man normalerweise Drehstromasynchronmotoren (Kurzschlussläufermotoren) wählen, wobei die Verwendung von anderen, über die Speisefrequenz steuerbaren Motoren (z.B. Reluktanz- oder sogar Synchronmotoren) nicht ausgeschlossen ist. Der bevorzugte Motorentyp ist der sogenannte Getriebemotor. Die effektive Drehzahl eines solchen Motors wird sowohl durch die Speisefrequenz wie auch durch die Über- bzw. Untersetzung des dem Motor zugeordneten Getriebes beeinflusst. Das Getriebe kann Wechselstellen umfassen, so dass die effektive Drehzahl bei gegebener Speisefrequenz eingestellt werden kann. Das Gesamtsystem ist aber vorzugsweise derart angeordnet, dass keine Wechselstellen erforderlich sind.

Der Antrieb für das Streckwerk kann mehrere Motoren umfassen. Es kann aber im Antrieb des Streckwerkes nur ein einziger Motor vorgesehen werden, wobei dann eine mechanische Übertragung der Motorenleistung an verschiedene Elemente des Streckwerkes erforderlich wird.

Die Erfindung sieht eine entsprechende Vorrichtung vor, mit einem Streckwerk zum Einsatz zwischen der bandbildenden Einrichtung und der Bandablage einer Textilmaschine, wobei zumindest die Bandablage durch eine Baugruppe einer Strecke zum Doublieren und Verstrecken von Faserbändern gebildet ist, und die,Baugruppe auch das Streckwerk der Strecke umfasst

Dabei wird weiterhin vorgeschlagen, dass die Baugruppe ein Streckwerk mit einer Liefergeschwindigkeit höher als 400 m/min umfasst.

Vorteilhafterweise wird vorgeschlagen, das Streckwerk der Baugruppe als Vergleichmässigungsaggregat auszubilden. D.h. das Streckwerk ist mit einer Regulier- oder Steuereinrichtung versehen, um die Bildung eines gleichmässigen Faserbandes zu gewährleisten.
Der Vorlagetisch der Strecke kann mit einem Bandleitelement für ein einziges Faserband ausgestattet sein.

In der Karde sind gegenwärtig mit Liefergeschwindigkeiten zwischen 10 M/min und 300 M/min zu rechnen. Der Faserbandtiter liegt normalerweise im Bereich 3,5 bis 6,5 ktex. Die Antriebsmotoren der bandliefernden Elemente der Karde (des Auslaufes) weisen Drehzahlen zwischen 150 und 4500 U/min bei Speisefrequenzen zwischen 5 und 150 Hertz auf. Die erforderliche Ausgangsleistung eines Frequenzumrichters, um sowohl den Kardenauslauf wie auch das Streckwerk mit Energie zu versorgen, liegt im Bereich 1,5 bis 3 kWatt.

Die Erfindung befasst sich auch mit der Verbesserung des Faserorientierungsgrades bzw. der Verminderung der Anzahl der Faserhaken (Faserhäkchen) im Kardenband. Der Begriff _{"}Kardenband" bedeutet hier ein Faserband, das in eine der Karde nachfolgende Bandablage geliefert wird.

### Stand der Technik:

Die Bedeutung des Faserorientierungsgrades und die Probleme, die aus der Bildung von Faserhaken in der Karde entstehen, sind im Fachbuch _{"}Verkürzte Baumwollspinnerei; Faserband-Spinnverfahren"(Herausgeber: _{"}Zeitschrift für die gesamte Textilindustrie", 1965) von Prof. Dr. W. Wegener und Dr. H. Peuker erklärt worden (Seite 82 ff, siehe aber insbesondere Seiten 87 bis 97). Daraus wird klar, dass die Verwendung eines Streckwerkes zur Verbesserung des Faserorientierungsgrades im Kardenband bekannt ist (Seite 87/88: Kapitel "Karden-band-Verzugsaggregate", siehe auch Seite 72 - _{"}Graf-Optima Kardenband-Vergleichmässigungsaggregat"). Mittlerweile sind weitere Vorschläge für die Verwendung eines Streckwerk am Auslauf der Karde vorgelegt worden (siehe z.B. u.a. US-C-4,100,649; US-C-3,703,023; Textile Asia, Juni 1989, Seite 20; CH-C-462 682; US-C-4,768,262; US-C-5,152,033; US C-4,947,947; US-C-5,400,476; US-C-5,274,883; US-C-5,018,248; DE-A-22 30 069; EP-A-512 683).

Seit der Erscheinung des erwähnten Fachbuches ist das Interesse am Direktverspinnen von Kardenband (ohne dazwischenliegende Streckenpassagen) sogar gestiegen, weil ein derartiges Verfahren durch den Erfolg des Rotorspinnens (ab 1970) begünstigt wurde - vgl. DE-A-40 47 719. Trotzdem ist es bisher nicht gelungen, das Direktverspinnen von Kardenband (ohne eine Streckenpassage) auch mittels des Rotorspinnverfahrens zu realisieren.

Mit anderen Worten ist es bisher bekannt, Kardenband (in einer Kanne) abzulegen, das Faserband mindestens einmal (aus der Kanne) abzuziehen und zu verstrecken, um das Orientierungsgrad zu erhöhen, wonach die Fasern (allenfalls nach weiteren Verarbeitungsschritten) versponnen werden können. Beim derartigen Verstrecken wird insgesamt keine Verfeinerung der Vorlage angestrebt - es werden z.B. sechs (oder acht) Faserbändern zu einem Vlies vereinigt, das anschliessend einem sechsfachen (bzw. achtfachen) Verzug unterworfen wird.

Die Erfindung sieht ein Verfahren zur Bildung eines Kardenbandes vor, wonach ein Kardenvlies zu einem Faserband zusammengefasst, das Faserband verstreckt und das verstreckte Band abgelegt wird, dadurch gekennzeichnet, dass das Faserband beim Verstrecken mittels eines Streckwerkes für das Doublieren von Faserbändern einem derart hohen Verzug unterworfen wird, dass das Faserorientierungsgrad wesentlich erhöht bzw. den Anteil der Hakenfasern wesentlich verkleinert wird.
Insbesondere kann das dem Ablegen vorgeschalteten Verstrecken des Faserbandes (z.B. mittels des genannten Streckwerk) dazu verwendet werden, den Anteil der Schlepphaken (vgl. das Fachbuch "Verkürzte Spinnerei", Seite 90) wesentlich zu reduzieren.

Dazu ist es zweckmässig, das Faserband einen Verzug von mehr als 2 und vorzugsweise mehr als 3 zu unterwerfen. Wenn möglich, sollte ein Verzug von 5 bis 6 verwendet werden, was sich aber nur selten zwischen dem Kardenauslauf und der anschliessenden Bandablage ohne Störungen im Laufverhalten des Faserbandes realisieren lässt.

Um einen derart hohen Verzug zwischen der bandbildenden Einrichtung und der Bandablage zu ermöglichen, sollte die bandbildende Einrichtung vorzugsweise ein Faserband mit einer relativ niedrigen Feinheit (grossen Stärke) erzeugen, z.B. mindestens 8 ktex und vorzugsweise 10 ktex oder sogar mehr (beispielsweise 12 ktex). Um dies zu ermöglichen, wird vorzugsweise mit einer relativ hohen Arbeitsbreite der Karde gearbeitet, z.B. grösser als 1200 mm. Dies kann mit einer Maschine gemäss unserer CH-Patentanmeldungen Nr. 1318/97 vom 3.6.97 realisiert werden. Der Gesamtinhalt der erwähnten CH-Anmeldun-gen wird hiermit zum integrierenden Bestandteil des vorliegenden Beschreibung genannt

Alternativen, die keine breite Karden erfordern, sind in EP-A-627 509 und US-C-5,535,488 beschrieben worden.

Die Bandfeinheit nach dem Streckwerk kann z.B. 3 bis 5 ktex betragen. Die Liefergeschwindigkeit am Ausgang des Streckwerks beträgt beispielsweise mehr als 400 m/min. Vorzugsweise wird ein derartiges Streckwerk auf der Bandablage vorgesehen (vgl. das Fachbuch "Verkürzte Baumwollspinnerei, Seite 72 und das darin erwähnte CS-Patent 98 939), so dass das vom Streckwerk gelieferte Faserband möglichst rasch (ohne einen langes Transportweg durchlaufen zu müssen) abgelegt werden kann.

Die Erfindung sieht dementsprechend ein Verfahren vor, wonach ein Kardenvlies zu einem Faserband zusammengefasst und das Band mit einem Verzug von mindestens 2 und vorzugsweise mehr als 3 vor dem Ablegen verstreckt wird, wobei das Verstrekken durch ein Streckwerk für das Doublieren von Faserbändern erfolgt.

Anders ausgedruckt sieht die Erfindung eine Karde mit einer faserbandbildenden Einrichtung, einer Bandablage und einem zwischen der bandbildenden Einrichtung und der Bandablage eingeschalteten Streckwerk vor, wobei das Streckwerk zum Erzeugen eines Verzugs höher als 2 und vorzugsweise höher als 3 gestaltet ist und für das Doublieren von Faserbändern geeignet wäre.

Das Streckwerk kann als Vergleichmässigungsaggregat gebildet werden, d.h. es kann zum Erzeugen eines steuerbar variablen Verzugs angeordnet werden, was aber nicht erfindungswesentlich ist. Verzugsänderungen werden zu entsprechenden Änderungen des Orientierungsgrades führen. Die Karde selbst kann daher zweckmässigerweise als Vergleichmässigungsaggregat gestaltet werden (z.B. nach EP-A-271 115), wobei das anschliessende Streckwerk zum Erhöhen des Faserorientierungsgrades konzipiert ist.

Die vorliegende Erfindung kann beispielsweise in einer Karde realisiert werden, die nach unserer DE-Patentanmeldung Nr. 197 38 053 vom 1.9.97 gebildet ist.

Die Erfindung kann auch zur Herstellung eines gekämmten Bandes an einer Kämmaschine eingesetzt werden, wonach ein gekämmtes Vlies zu einem Faserband zusammengefasst wird. Die dabei an jedem Kämmkopf gebildeten Faserbänder werden mittels eines Streckwerkes zu einem Faserband zusammengefasst bzw. doubliert. Das dabei gebildete Faserband wird anschliessend nochmals verstreckt und abgelegt. . Insbesondere kann das dem Ablegen vorgeschaltete Verstrecken des Faserbandes dazu verwendet werden, die Wirkungen der Lötungen ( Ungleichmässigkeiten in der Fasermasse ) des Kämmverfahrens zu reduzieren.

Die Bandfeinheit nach dem weiteren Streckwerk kann z.B. 3 bis 5 ktex betragen. Die Liefergeschwindigkeit am Ausgang des letzten Streckwerkes beträgt beispielsweise mehr als 400 m/min. Vorzugsweise wird ein derartiges Streckwerk auf der Bandablage vorgesehen (vgl. das Fachbuch "Verkürzte Baumwollspinnerei, Seite 72 und das darin erwähnte CS-Patent 98 939), so dass das vom Streckwerk gelieferte Faserband möglichst rasch (ohne einen langen Transportweg durchlaufen zu müssen) abgelegt werden kann.

Das letzte Streckwerk kann als Vergleichmässigungsaggregat ausgebildet werden, d.h. es kann zum Erzeugen eines steuerbar variablen Verzugs vorgesehen werden. Die Kämmaschine selbst, samt eines ersten, ihr zugeordneten Streckwerkes, kann aber zweckmässigerweise auch als Vergleichmässigungsaggregat gestaltet werden (z.B. nach EP-A-376 002).

Beispiele der Erfindung werden nun anhand der in den Figuren der Zeichnungen dargestellten Ausführungen in Anwendung an einer Karde oder Kämmaschine näher erklärt. Es zeigt:
- Fig. 1: eine Kopie der Fig. 1 aus EP-A-671 355,
- Fig. 2: eine schematische isometrische Darstellung einer Bandablage für eine Karde nach Fig. 1,
- Fig. 3: eine Kopie der Fig. 1 aus DE-A-195 48 840,
- Fig. 4: eine schematische Darstellung einer Kombination nach der vorliegenden Erfindung
- Fig. 5: eine schematische Darstellung ein Modifikation
- Fig. 5A: eine erweiterte Ausführungsform nach Fig. 5 mit einem elektrischen Drosselglied
- Fig. 5B: eine weitere Ausführung nach Fig. 5A
- Fig. 6: ein Detail aus Fig. 5
- Fig. 7: eine schematische Ansicht einer Karde nach der Erfindung und
- Fig. 8: ein Diagramm zur Erklärung der Ausführung nach Fig. 7
- Fig. 9: eine Anordnung nach der Fig. 1 aus EP-A-349 866,
- Fig. 10: ein Detail der Anordnung nach Fig. 9,
- Fig. 11: eine Anordnung nach der einzelnen Fig. aus EP-A-640 704,
- Fig. 12: eine Modifikation der Anordnung nach Fig. 9, um sie für eine Ausführung nach Fig. 13 vorzubereiten,
- Fig. 13: eine schematische Darstellung einer Ausführung der vorliegenden Erfindung,
- Fig. 14: eine schematische Darstellung einer Modifikation der Anordnung nach Fig. 13
- Fig. 15: ein Detail aus Fig. 14,
- Fig. 16: eine Kopie der Fig. 1 aus EP-A-799 916, und
- Fig. 17: eine schematische Darstellung einer weiteren Ausführung nach der vorliegenden Erfindung.

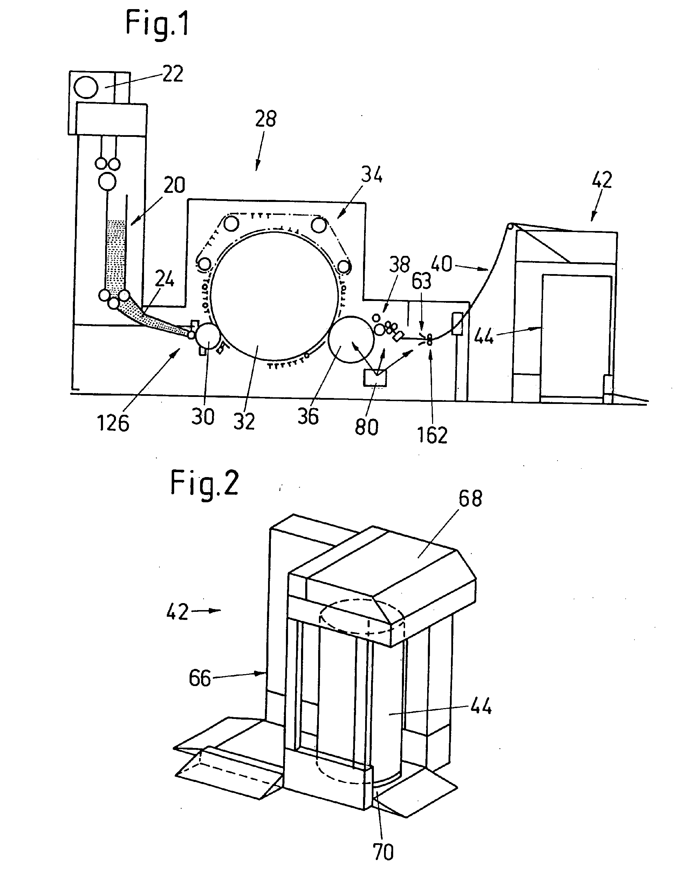

Die in Fig. 1 dargestellte Kardeneinheit umfasst einen Füllschacht 20, der Fasermaterial aus einem schematisch angedeuteten Flockentransportsystem 22 erhält und daraus eine Watte 24 bildet, welche an die Speisevorrichtung 126 der Karde 28 weitergeleitet wird. Die Karde selbst ist konventioneller Bauart mit einem Vorreisser (auch Briseur genannt) 30, einer Trommel (auch Tambour genannt) 32, einem Wanderdeckelgerät 34 und einem Abnehmer 36, der Teil des Auslaufes 38 bildet. Im Kardenauslauf wird ein Faserband 40 gebildet, das an die Bandablage (Kannenpresse bzw. den Kannenstock) 42 geliefert wird, wo das Band in Windungen in einer Kanne 44 abgelegt wird.
Die Bandablage 42 ist eine autonome Maschine mit eigenem Antrieb und kann frei gegenüber der Karde 28 aufgestellt werden. Sie umfasst ein Gestell 66 (Fig. 2) mit einer Kopfpartie 68, einer Fusspartie 70 und einer dazwischen liegenden Kannenaufnahmestation (kein Bezugszeichen). Die wesentlichen Arbeitselemente der Bandablage bestehen aus
- einem Drehteller in der Fusspartie 70,
- einem Trichterrad in der Kopfpartie 68, und
- einem Einzugswalzenpaar oberhalb (oder unterhalb) des Trichterrades.

Die Kanne 44 wird auf den Drehteller gestellt und gegen Rotation gegenüber dem Teller befestigt (nicht gezeigt). Der Drehteller wird vom Bandablagenantrieb um eine senkrechte Achse gedreht, wobei die Kanne 44 mitgenommen wird.

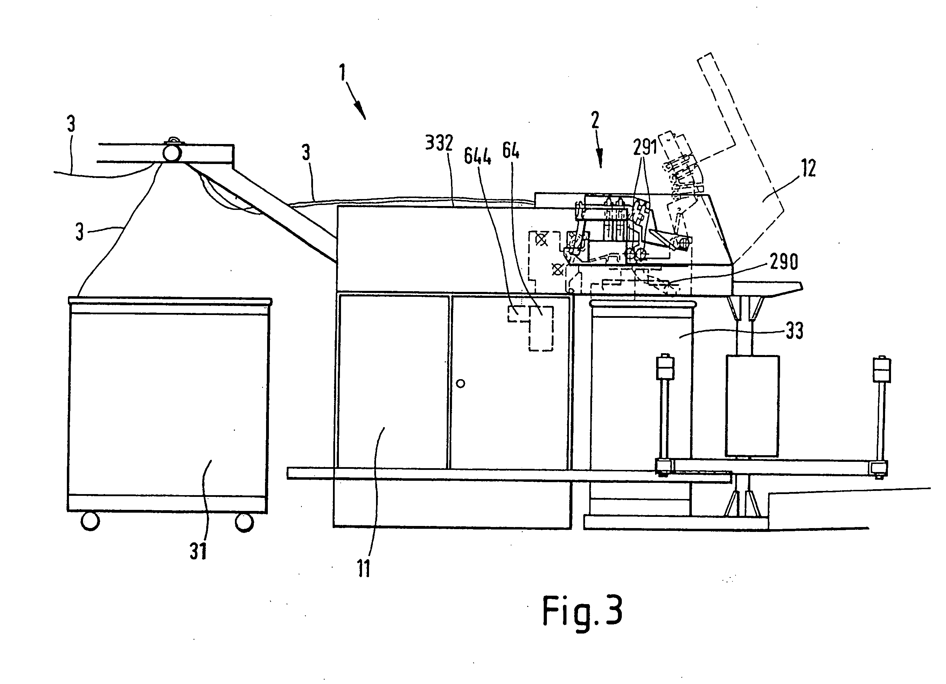

Die Strecke 1 in der Fig. 3 besteht im wesentlichen aus einem Gehäuse 11 zur Aufnahme der Antriebs- und Hilfsaggregate, sowie dem Streckwerk 2 für das Verstrecken und Doublieren der Faserbänder 23. Diese werden Vorlagekannen 31 entnommen und über einen Vorlagetisch 332 der Strecke 1 dem Streckwerk 2 zugeführt. Die Kannen 31 werden z.B. von einer Karde gemäss Fig. 1 geliefert (vgl. Kanne 44, Fig. 1). Nachdem das Faserband 23 das Streckwerk verlassen hat, wird es über die Kalanderwalzen 291 in ein Ablagerohr 290 geführt, das teil eines Drehtellers ist, der das Faserband in eine Ablagekanne 33 ablegt. Das Streckwerk 2 ist über eine in Fig. 1 gestrichelt dargestellte Abdeckung 12 gegenüber dem umgebenen Raum abgedeckt. Die Abdeckung 12 beinhaltet im wesentlichen eine Absaugung, die das staubförmige Material, das beim Verstrecken freigesetzt wird, abführt. Die Abdeckung ist vom Streckwerk wegschwenkbar, wobei dies in günstiger Weise gleichsinnig mit den Druckarmen erfolgen kann. Die Unterwalzen des Streckwerkes 2 sind in bekannter Weise über Riementriebe angetrieben. Für weitere Einzelheiten des Streckwerkes wird auf die DE-A-195 48 840 hingewiesen.

Die Arbeitselemente der Strecke sind auf einer derartigen Höhe, dass sie vom Bedienungsperson nicht ohne Hilfsmittel erreichbar sind. Am Gehäuse 11 ist deshalb ein Podest 13 vorgesehen, worauf ein Mensch stehen/gehen kann, um Zugang zum Tisch 332, Abdeckung 12 und Streckwerk 2 zu erhalten. Ein solches Podest wird normalerweise nur an einer Maschinenseite vorgesehen, da auf der anderen Seite sperrige Geräte (Antriebselemente) vorgesehen sind. In der dargestellten Maschine läuft der Materialfluss von links nach rechts von der Bedienungsseite betrachtet.

Die Vorlagekannen 31 sind in einem "Gatter" eingereiht, wobei aus Platzgründen nur eine Kanne 31 in Figur 3 gezeigt worden ist. Es werden normalerweise mindestens vier und vorzugsweise acht Faserbändern aus je einer Kanne entnommen und auf dem Tisch 332 zu einem Vlies zusammengefasst. Dieser Schritt ist z.B. in DE-A-41 42 038 gezeigt. Die Strecke 1 ist dementsprechend zum _{"}Doublieren" (Zusammenlegen) von mehreren Faserbändern 3 konzipiert und entsprechend ausgelegt worden, wobei das Streckwerk 2 zum Verstrecken von einem aus mehreren Faserbändern gebildeten Vlies konstruiert ist. Das Streckwerk 2 weist aber einen derartigen Verzug auf, dass das von ihm gelieferte Faserband die gleiche Durchschnittsfeinheit (Bandnummer) aufweist, wie die einlaufenden Bändern 23, d.h. das Streckwerk erzeugt normalerweise einen Grundverzug von 6 oder 8.

Der Gesamtverzug vom Streckwerk 2 kann fest (vorzugsweise aber einstellbar) vorgegeben werden, wie dies z.B. in der SB-Strecke von Rieter Ingolstadt der Fall ist. In einer Variante kann das Streckwerk 2 als reguliertes Streckwerk gebildet werden, wie dies in der Rieter Ingolstadt RSB-Strecke der Fall ist.

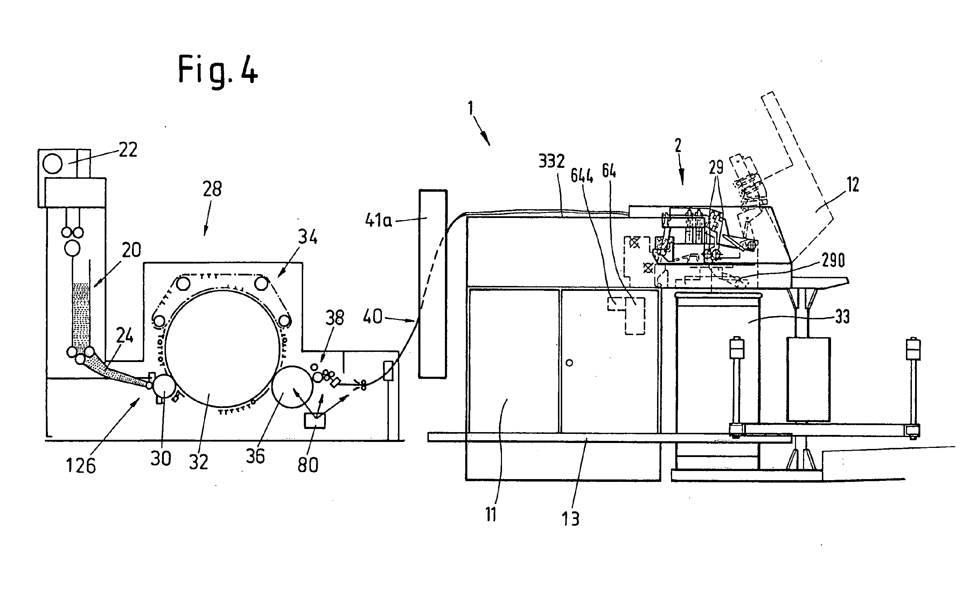

Fig. 4 zeigt nun schematisch eine neue Kombination der Maschinen nach den Figuren 1 und 3, wobei auf die verschiedenen Massstäben der Darstellungen in dieser schematischen Figur nicht geachtet wurde. In dieser Kombination sind die Bandablage 42 der Karde nach Fig. 1 sowie der Kannengatter der Strecke nach Fig. 3 eliminiert worden, wobei anstelle dieses Gatters eine Übergabeeinrichtung (schematisch mit 41a angedeutet) eingeschaltet worden ist.

Die Karde 34 in der Fig. 4 liefert nach wie vor ein einziges Faserband 40, welches aber nun über den Vorlagetisch 332 an das Streckwerk 2 weitergeleitet wird, ohne vorher in einer Kanne abgelegt werden zu müssen. Das Streckwerk 2 bleibt (im Vergleich zum Streckwerk 2 in der Fig. 3) unverändert, d.h. dieses Streckwerk ist nach wie vor dazu geeignet ein Vlies zu verstrecken, wobei in diesem Fall nur ein einziges Kardenband eingeliefert wird. Die Infrastruktureinrichtungen (z.B. die Antriebe und Absaugeinrichtungen) der Strecke 1 nach Fig. 3 können ebenfalls unverändert bleiben. Dadurch ist es möglich, käufliche Streckwerksmodule an einer Karde anzubauen, ohne ein speziell für die Karde konzipiertes Streckwerk konstruieren und bauen zu müssen. Die Strekke/Bandablage-Einheit ist weitgehend gegenüber der Karde autonom, insbesondere was die Positionierung der Bandablage gegenüber einem allfälligen automatisierten Kannentransportsystem (nicht gezeigt) anbetrifft.

Der Vorlagetisch 332 sollte nun aber mit mindestens einem Bandleitelement (nicht gezeigt) versehen werden, das dazu geeignet ist, eine einziges Faserband über den langen Tisch in die Einlaufwalzen des Streckwerkes 2 einzuführen. Der Tisch kann auch mit einer Einfädelhilfe (nicht gezeigt) versehen werden, um das Einfädeln eines einzigen Bandes zu erleichtern.

Eine Strecke kann meistens beim Kannenwechsel in ihrer Bandablage zum Stillstand gebracht werden, da der Hochlauf bzw. Tieflauf der Walzen eines Streckenstreckwerkes relativ leicht beherrschbar ist. Eine Karde kann beim Kannenwechsel in einer ihr direkt zugeordneten Bandablage (z.B. in der Bandablage 42, Fig. 1) nicht zum Stillstand gebracht werden, da die Walzen einer Karde eine relativ hohen Massenträgheit aufweisen. Die Bandablage einer Karde muss daher zum Ausführen eines _{"}fliegenden Wechsels" ausgelegt werden. Die Bandablage der Strecke 1 in Fig. 4 wird vorzugsweise entsprechend angepasst, um einen fliegenden Wechsel zu ermöglichen. Eine dazu geeignete Bandtrennvorrichtung ist in EP Patentanmeldung Nr. 97810729 gezeigt, wobei diese Anmeldung voraussichtlich am 10 Juni 1998 unter der Nr. EP-A-846 795 veröffentlicht werden soll.

Fig. 4 zeigt in der Bandablage eine Spinnkanne mit einem runden Querschnitt. Die Maschinenkombination gemäss Fig. 4 ist aber insbesondere für das sogenannte Direktspinnverfahren wichtig, wonach das vom Streckwerk 2 gelieferte Faserband an eine Endspinnmaschine weiter transportiert wird. Die Endspinnmaschine sollte zum Verspinnen von Faserband mit einer vorgegebenen Bandnummer konzipiert sein, wie dies z.B. für die Rotorspinnmaschine der Fall ist. Insbesondere für das Rotorspinnen ist es oft zweckmässig, runde Spinnkannen durch sogenannte _{"}Flachkannen" zu ersetzen. Dazu geeignete Einrichtungen sind z.B. aus DE-A-42 33 357, DE-A-43 24 951, DE-A-43 24 948, DE-A-44 16 911 und DE-A-44 16 948 entnehmbar. Die Bandablage nach Fig. 4 kann in solchen Fällen durch eine Bandablage für Flachkannen ersetzt werden, wobei diese Modifikation für die Koppelung der Streckeribaugruppe mit der Karde keine Rolle spielt.

Eine Ausführung eines Antriebes für die Karde selbst ist z.B. in der deutschen Gebrauchsmusteranmeldung G 9312638.7 vom 24. August 1993 beschrieben. Der Antrieb umfasst einen Hauptantriebsmotor (nicht gezeigt) für die Trommel 32 (Fig. 1) und das Wanderdeckelgerät 34. Der Hauptantriebsmotor kann zum Beispiel nach EP-A-557 242 ausgeführt werden. Es sind zusätzlich ein Antriebsmotor 80 für den Abnehmer 36 und die anderen Arbeitselemente des Auslaufes 38 bis und mit einem Walzenpaar 162 vorgesehen, wie in Fig. 1 schematisch durch die vom Antrieb 80 ausgehenden Pfeile angedeutet wird. Walzenpaar 162 kann, z.B. nach EP-A-186 741 gebildet werden, um ein von der Bandnummer abhängiges Signal zu erzeugen.

Bezüglich des Antriebs für die Strecke 1, insbesondere für das Streckwerk 2, kann von einem Antrieb nach EP-A-450 043 ausgegangen werden.

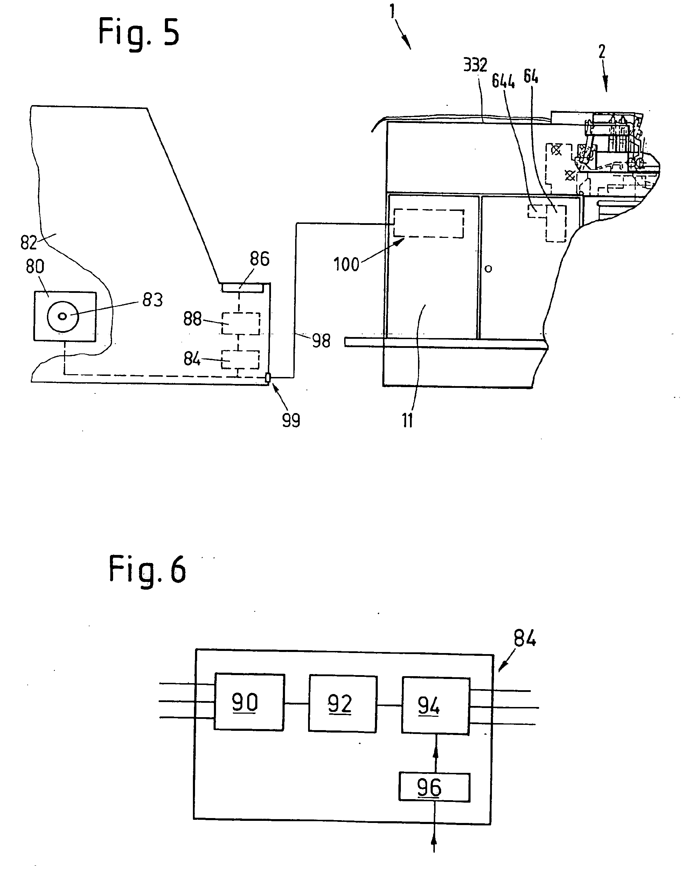

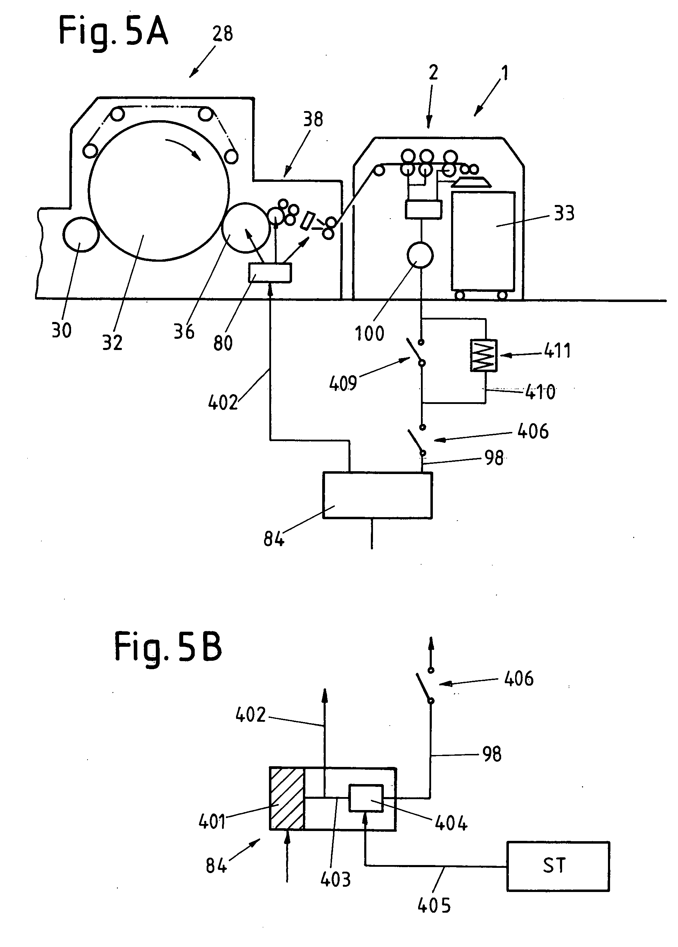

Fig. 5 zeigt nun schematisch eine Variante, wobei das Bezugszeichen 82 auf die Verschalung der Auslaufpartie der Karde deutet und auf den Antrieb für den Auslauf nochmals mit dem Bezugszeichen 80 hingewiesen wird. In einer kostengünstigen Ausführung umfasst dieser Antrieb 80 einen stufenlos steuerbaren, wartungsfreien Asynchronmotor 83 (z.B. einen Kurzschlussläufermotor), der mittels eines Frequenzumrichters 84 mit elektrischen Energie gespeist wird. Die Ausgangsfrequenz des Umrichters 84 ist über ein Eingabegerät 86 einstellbar, das in einer programmierbaren Steuerungseinheit 88 der Karde integriert ist. Eine solche Anordnung ist heutzutage allgemeiner Stand der Technik für die Karde, d.h. die Elemente 80,83,84,86 und 88 (oder ihre Aequivalente) sind für eine moderne Karde nahezu unerlässlich.

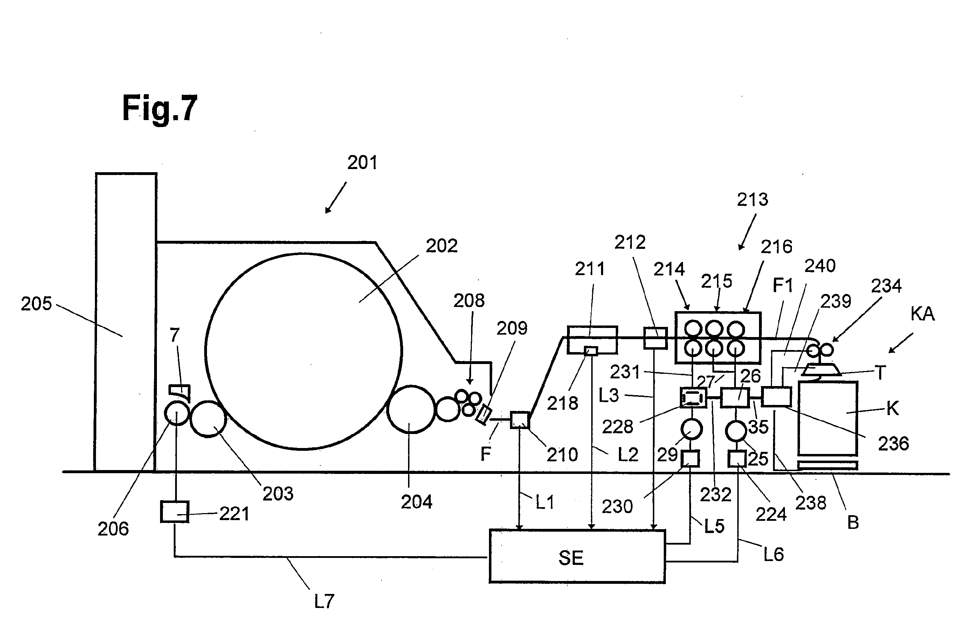

Der Umrichter 84 umfasst normalerweise einen Gleichrichter 90 (Fig. 6), der Wechselstrom von einem 3-Phasen Netz erhält und Gleichstrom an einen Zwischenkreis 92 liefert. Ein steuerbarer Leistungsteil 94 wandelt Gleichstrom aus dem Zwischenkreis 92 in Wechselstrom mit einer Frequenz, die von einer Umrichtersteuerung anhand eines Signals von der Einheit 88 bestimmt wird. Dieses Wechselstrom (einphasig oder dreiphasig) wird dem Motor 83 gespeist.

Die Synchrondrehzahl des Motors 83 wird eindeutig durch die Ausgangsfrequenz des Frequenzumrichters 84 vorgegeben. Die effektive Drehzahl der Motorwelle wird aber nicht allein in Abhängigkeit von dieser Synchrondrehzahl bestimmt. Diese Drehzahl hängt auch von der Last ab, welcher der Motor unterworfen ist, das heisst im Motor 83 entsteht zwischen dem Rotor und dem Stator ein sogenannter "Schlupf'. Diese Tatsache allein würde zu gar keinem Problem führen, wenn der Schlupf voraussehbar wäre. In der Praxis ändert sie sich aber kontinuierlich als eine Funktion der momentanen Lastverhältnissen, die nicht genau vorhersehbar sind.

Obwohl der Schlupf nicht kontrollierbar ist, kann das "Schlupfverhalten" (d.h. der Verlauf der Aenderungen des Schlupfes in Abhängigkeit von Laständerungen) sowohl in der Richtung wie auch in der Grössenordnung geschätzt werden. Im wesentlichen handelt es sich in der Auslaufpartie um Reibungsverluste und Verdichtungsarbeit, zum Beispiel als das Faserband durch den Trichter 63 (Fig. 1) gezogen wird. Solche Lastkomponenten sind abhängig vom Bandtiter und Liefergeschwindigkeit. Über einen Liefergeschwindigkeitsbereich bis 300 m/min kann man Asynchronmotoren wählen, die unter diesen Umständen einen Schlupf von maximal 3% aufweisen.

Der Frequenzumrichter 84 wird normalerweise derart ausgelegt werden, dass er zumindest imstande ist, eine Bandablage auch mit der nötigen Energie zu versorgen, dies weil die Karde oft mit einer mit ihr mechanisch gekoppelten Bandablage versehen ist und daher grundsätzlich entsprechend konstruiert werden muss. Es besteht kein Problem daher, die für eine "autonome" Maschine erforderliche Energie über zum Beispiel eine Steckdose 99 der Kardenverschalung 82 vom Ausgang des Umrichters abzuzweigen und über einen Kabel 98 an einen Antriebsmotor 100 der Strecke 1 zu speisen. Der Motor 100 ist ein einfacher Drehstromgetriebemotor, der ähnlich dem Motor 83 direkt anhand der vom Frequenzumrichter erhaltenen Energie gesteuert wird. Der Verzug im Streckwerk 2 ist in diesem Fall fest vorgegeben aber allenfalls einstellbar.

Verzugsänderungen können durch Wechselräder in den Getrieben bewerkstelligt werden. In der bevorzugten Lösung ist kein Wechselrad in dem Getriebe zwischen dem Motor 83 und dem Walzenpaar 162 vorgesehen, da sonst bei einer Aenderung der Ueber- bzw. Untersetzungsverhältnisse an dieser Stelle eine entsprechende Aenderung der verzugsbestimmenden Wechselrädern des Motors 100 durchgeführt werden muss, wenn keine Verzugsänderung vorgesehen ist.

Die Variante ist anwendbar, sofern die Anforderung erfüllt wird, dass das Schlupfverhalten des Antriebs für den Maschinenauslauf dem Schlupfverhalten des Streckenantriebs gleich ist. Diese Anforderung kann auch dann erfüllt werden, wenn im Kardenauslauf nicht alle Elemente durch einen einzigen Motor angetrieben werden. Im Normalfall wird aber der Auslauf vom Abnehmer bis zur Lieferung durch nur eine Antriebsquelle in Bewegung gesetzt werden.

In den Fig. 5A und Fig. 5B werden weitere Ausführungen gezeigt, wobei wie in Fig.5 im Detail beschrieben, der Antrieb 80 des Auslaufes 38 der Karde 28 sowie der Antrieb 100 der Strecke über einen gemeinsamen Frequenzumrichter mit elektrischer Energie versorgt werden.
Der Antrieb der Strecke (z.B. bei Verwendung eines Asynchronmotors) benötigt einen sehr hohen Einschaltstrom bis er auf eine entsprechende Drehzahl hochgefahren ist. Gelegentlich muss die Machinenkombination Karde/Strecke heruntergefahren werden, um z.B. einen Sortimentswechsel oder Wartungsarbeiten durchzuführen. Es kann auch vorkommen, dass nur die Strecke heruntergefahren wird, um ein neues Faserband, das von der Auslaufpartie der Karde geliefert wird wieder bei der Streckwerkseinheit 2 anzusetzen. Beim wieder Hochfahren der Maschinenkombination, oder auch nur von der Strecke, kann es vorkommen, dass durch die plötzliche Zuschaltung des Antriebes 100 der Strecke 1 eine Überlastung des gemeinsamen Frequenzumrichter 84 auftritt, wodurch der Frequenzumrichter ausfällt und somit auch der Antrieb des Auslaufes 38 der Karde 28 unterbrochen wird.
Um dies zu verhindern, wird vorgeschlagen, in die Übertragungsleitung 98 ein elektrisches Drosselglied 411 einzubauen, um die Stromzufuhr zum Antrieb 100 auf einen bestimmten Wert zu begrenzen, der gewährleistet, dass keine Stromspitzen auftreten, die zu einem Ausfall des Frequenzumrichter führen.
Beim Hochstarten von der Strecke 1 wird der Schalter 406 geschlossen und der Antrieb 100 über die Strompfade 406 und 410 sowie über das elektrische Drosselglied 411 versorgt. Der parallel zur Drossel angeordnete Schalter 409 bleibt während der Hochlaufphase geöffnet. Sobald die Hochlaufphase abgeschlossen ist und die Streckwerkseinheit 2 eine bestimmte Drehzahl erreicht hat, kann der Schalter 409 geschlossen werden, wodurch die Stromzufuhr nun direkt über die Leitung 98 unter Umgehung der Drossel 411 erfolgen kann.
In Fig.5B wird ein weitere Ausführung gezeigt, wobei anstelle des Drosselgliedes 411 ein Element 404 zur Begrenzung der Stromabgabe direkt im gemeinsamen Frequenzumrichter 84 integriert ist. Dieses Element 404 wird über die Leitung 405 von einer Steuereinheit ST und entsprechend der Hochlaufphase gesteuert, um eine Überlastung des Umrichterelementes 401 zu unterbinden. Das Umrichterelement 401 ist über die Leitung 403 mit dem Element 404 verbunden. Die Stromenergie zum Antrieb 80 wird ebenfalls von der Leitung 403 abgenommen und über die Leitung 402 übertragen.
Mit den in Fig.5A und Fig.5B gezeigten Einrichtungen wird ein störungsfreies Hochfahren der Streckwerkseinheit gewährleistet. Die Anwendung einer derartigen Einrichtung ist auch bei anderen Maschinenkombinationen (z.B. Kämmaschine/Strecke) möglich, sofern eine Koppelung deren Antriebe über einen gemeinsamen Frequenzumrichter erfolgt.

In Fig. 7 wird schematisch eine Karde 201 gezeigt, die mit einer Trommel 202 versehen ist. Das über einen schematisch gezeigten Speiseschacht 205 zugeführte Fasergut gelangt über eine Speisewalze 206 und einen Vorreisser 203 zur Trommel 2. Oberhalb der Speisewalze 206 ist eine Speisemulde 207 angeordnet. Die Speisemulde 207 kann, wie an sich bekannt, beweglich angeordnet sein und dient gleichzeitig als Sensor zur Erfassung von Material-ungleichmässigkeiten bezüglich der gelieferten Materialmenge. Anhand dieses Signals kann die Zufuhr des Materialgutes vom Speiseschacht gesteuert werden. Über einen Abnehmer 204 werden die durch die Trommel 202 aufgelösten Fasern abgenommen, welche das Gut an nachfolgende Vliestransportwalzen 208 übergibt.

Das von den Transportwalzen 208 transportierte und weiterbeförderte Faservlies wird z.B. auf ein Querförderband 209 abgegeben. Durch den seitlichen Abtransport, bzw. das seitliche Abziehen des Faservlieses über das Querförderband 209 wird ein Faserband F gebildet. Zur Bildung dieses Faserbandes F, das am Ende des Querförderbandes 209 umgelenkt werden muss, werden nicht gezeigte Umlenkhilfen, bzw. Trichterelemente verwendet. Das Faserband F, auch Kardenband genannt, wird anschliessend durch einen Sensor 210 geführt, der die Faserbandmasse (Ist-Wert) ermittelt und über eine Leitung L1 an eine Steuereinheit SE abgibt. Der Sensor 210 dient dabei im wesentlichen zur Erfassung von langwelligen Veränderungen, bzw. zur Erfassung von Abdriftungen in der Faserbandmasse von einem vorgegebenen Sollwert. Anhand des vom Sensor abgegebenen Ist-Signals und in Vergleich mit einem in der Steuereinheit SE abgelegten Soll-Wert wird, wenn notwendig, ein Steuerimpuls erzeugt, der über die Leitung L7 an den Antrieb 221 der Speisewalze 206 zur Steuerung überführt wird.

Durch diese Nachregulierung des Antriebs 221, bzw. die Änderung der Drehzahl der Speisewalze 206 können die vom Sensor 210 ermittelten Massenabweichungen zeitverzögert ausreguliert werden.

Das den Sensor 210 durchlaufende Faserband F gelangt in einen schematisch dargestellten Faserbandspeicher 211, der als Puffersektor für das Faserband zum Ausgleich von Unterschieden in der Fördergeschwindigkeit des Faserbandes zwischen der Abgabe der Karde und einem nachfolgenden Regulierstreckwerk 213 dient. Der Faserbandspeicher 211 ist mit einem Überwachungssensor 218 versehen, der über die Leitung L2 ein Signal an die Steuereinheit SE abgibt. Bevor das von dem Speicher 211 abgegebene Faserband F in das Regulierstreckwerk 213 gelangt, wird es von einem Sensor 212 abgetastet, der die dabei ermittelten Werte über die Leitung L3 an die Steuereinheit SE abgibt.

Das Streckwerk 213 besteht im gezeigten Beispiel aus drei hintereinander geschalteten Walzenpaaren 214,215 und 216, wobei in der dargestellten Ausführung das Eingangswalzenpaar 214 zur Ausregulierung von Massenschwankungen im Faserband in der Drehzahl veränderbar angetrieben wird. In einer bevorzugten (nicht gezeigten) Variante wird das Ausregulieren durch Verzugsveränderungen im Hauptverzugsfeld (zwischen den Walzen 215 und 216) durchgeführt. Die Erklärung anhand der dargestellten Ausführung gilt aber sinngemaäss auch für die bevorzugten Variante.

Das Lieferwalzenpaar 216 wird über einen Hauptmotor 25 und ein nachfolgendes Getriebe 26 mit einer konstanten Geschwindigkeit angetrieben. Wie durch den Antriebsstrang 27 schematisch angedeutet, kann auch das mittlere Walzenpaar 215 mit einer konstanten Geschwindigkeit angetrieben, um ein konstantes Drehzahlverhältnis zu den nachfolgenden Lieferwalzen 216 aufzuweisen. Durch das vorgegebene Drehzahlverhältnis wird ein konstanter Verzug des Faserbandes zwischen den Walzenpaaren 215 und 216 durchgeführt. Der Motor 25 wird über einen Frequenzumrichter 224 und über die Leitung L6 von der Steuereinheit SE gesteuert. Über die Antriebsverbindung 232 wird ein Differentialgetriebe 228 angetrieben, das über den Antriebsstrang 231 das Eingangswalzenpaar 214 antreibt. Der Antrieb des Differentials 228 kann durch einen Regelmotor 29, der über den Frequenzumrichter 230 und die Leitung L5 über die Steuereinheit SE angesteuert wird, übersteuert werden. Diese Übersteuerung erfolgt anhand der von dem Sensor 212 abgegebenen Signale, die mit einem in der Steuereinheit SE abgelegten Soll-Wert verglichen werden.

Im Anschluss an das Regulierstreckwerk 213 ist einen Kannenablage KA angeordnet, bei welcher das von dem Streckwerk abgegebene Faserband F1 über ein Kalanderwalzenpaar 234 und ein Trichterrad T in eine Kanne K abgelegt wird. Die Kanne K steht dabei auf einem angetriebenen Kannenteller B, der die Kanne K während dem Befüllvorgang in Drehung versetzt. Der Kannenteller B wird über den Antriebspfad 238 von einem Getriebe 236 angetrieben. Über den Antriebspfad 240 und 239 werden die Kalanderwalzen 234 und das Trichterrad T ebenfalls von diesem Getriebe 236 angetrieben. Das Getriebe 236 erhält seinen Antrieb über die schematisch gezeigte feste Antriebsverbindung 35 des Getriebes 26, das von dem Hauptmotor 25 angetrieben wird. Daraus ist zu entnehmen, dass das Lieferwalzenpaar 216 mit den Antriebselementen der Kannenablage KA direkt über das Getriebe 26 miteinander fest gekoppelt sind. Das heisst, sobald das Getriebe 26 durch den Motor 25 mit einer geringeren Drehzahl angetrieben wird, sinkt einerseits die Basisdrehzahl der Walzenpaare 214,215 und 216 und andererseits gleichzeitig die Drehzahl der Kalanderwalzen 234 des Trichterrades T und des Kannentellers B der Kannenablage KA.

Das von der Karde 201 über das Querförderband gebildete und gelieferte Faserband F wird durch einen Sensor 210 erfasst und dessen Masse gemessen. Die gemessenen Werte werden zur Steuereinheit SE übertragen, worin sie mit einem Soll-Wert verglichen werden. Weicht der dabei ermittelte Ist-Wert vom Soll-Wert ab, so wird einerseits über die Leitung L7 an den Antrieb 221 der Speisewalze 206 ein Steuerungssignal zur Nachregulierung der Drehzahl gegeben. Gleichzeitig wird dieses Signal auch für die Nachregulierung der Basisdrehzahl des Motors 25 verwendet, um die zu erwartenden Auswirkungen durch den Regeleingriff im Regulierstreckwerk 213 bereits so auszugleichen, so dass dieser keinen wesentlichen Einfluss auf den Füllgrad des vorgeschalteten Band-speichers 211 ausübt. Als Zusatzsignal zur Verstellung der Basisdrehzahl kann auch das Signal des Füllstandssensors des Bandspeichers herangezogen werden. Dabei kann die Steuerung so eingestellt sein, dass das Signal des Füllstandsensors nur dann zusätzlich zur Beeinflussung der Basisdrehzahl herangezogen wird, wenn sich dieser ausserhalb eines vorgegebenen Toleranzbereiches befindet. Dadurch erhält man eine zusätzliche Sicherheit in bezug auf die Funktion des ersten Sensors am Auslauf der Karde. Befindet sich das Signal des Füllstandssensors fortwährend ausserhalb seines vorgegebenen Toleranzbereiches, so ist die Funktion des ersten Sensors zu überprüfen. Da der Regeleingriff bei der Speisewalze 206 erst relativ spät und zeitverzögert zur Auswirkung kommt, muss die vom Sensor 210 ermittelte Abweichung der Masse von einem Soll-Wert voll durch das nachfolgende Regulierstreckwerk 213 ausgeglichen werden.

In dieser Ausführung bildet der Bandspeicher 211 eine Übergabevorrichtung 41 nach Fig. 4.

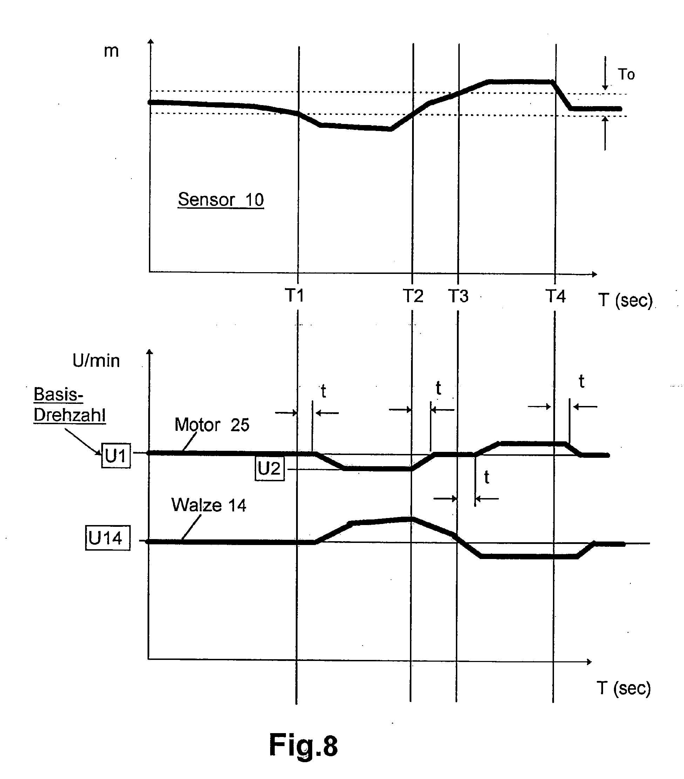

Der Ausgleich wird nun anhand der Diagramme, welche in Fig. 8 gezeigt sind, näher erläutert. Ausgehend von einer Basis- bzw. Betriebsdrehzahl U1 wird zum Zeitpunkt T1 über den Sensor 210 ein Abdriften der Masse m ausserhalb eines vorgegebenen Toleranzbereiches To festgestellt. Würde nun das Abdriften der Masse im Zeitpunkt T1 ohne Eingriff in die Basisdrehzahl erfolgen, so wäre der Vorgang wie folgt: Aufgrund der dem Streckwerk 213 vorgelegten geringeren Masse muss der Verzug zwischen den Walzenpaaren 214 und 215 herabgesetzt werden. Das heisst, über den Regelmotor 29 und das Differential 228 wird die Drehzahl des Eingangswalzenpaares 214 erhöht, wodurch gleichzeitig der Verzug zwischen den Walzenpaaren 214 und 215 verringert wird, da die Drehzahl des Walzenpaares 215 konstant bleibt. Durch die Verringerung der Drehzahl des Eingangswalzenpaares 214 wird auch die Einzugsgeschwindigkeit des gelieferten Faserbandes F verringert. Da die Karde bzw. die Abnehmerwalze mit konstanter Geschwindigkeit betrieben wird, bleibt die ursprüngliche Liefergeschwindigkeit des Faserbandes von der Karde gleich. Der hierdurch entstandene Unterschied zwischen der Liefergeschwindigkeit der Karde und der geänderten Einzugsgeschwindigkeit des Faserbandes beim Streckwerk 213 wird durch den Faserbandspeicher 211 aufgefangen. Das heisst, die überschüssig gelieferte Menge an Faserband F füllt den Faserbandspeicher 211 solange auf, bis wieder gleiche Verhältnisse zwischen der Abgabegeschwindigkeit bei der Karde und der Einzugsgeschwindigkeit beim Streckwerk vorhanden sind. Dieser Ausgleich kann dann wieder herbeigeführt werden, sobald der Regeleingriff bei der Speisewalze 206 seine Auswirkung bei der Abgabe an der Karde erzeugt. Treten diese Massenabweichungen abwechselnd einmal nach oben, bzw. nach unten auf, so hat dies keine grösseren Auswirkungen auf den Füllgrad des Speichers 211. Der Bandspeicher 211 muss lediglich eine genügend grosse Aufnahmekapazität aufweisen. Treten jedoch diese Massenabweichungen in regelmässigen oder unregelmässigen Abständen im wesentlichen in einer Richtung auf, so steht die vorhandene Kapazität des Puffers im Bandspeicher 211 bald an der Grenze.

Um diese Nachteile zu vermeiden und um die benötigte Kapazität des Bandspeichers auf einem Minimum zu halten, wird nun ein Eingriff in die Basisdrehzahl des Antriebsmotors 25 durchgeführt. Sobald, z.B. zum Zeitpunkt T1, die über den Sensor 210 ermittelte Massenabweichung sich ausserhalb eines vorgegebenen Toleranzbereiches To befindet, wird mit einer Zeitverzögerung t auch die Drehzahl des Motors 25 verändert. Aus dem oberen Diagramm ist ersichtlich, dass die Masse kleiner wird, wodurch auch der Verzug im Streckwerk 213 durch Erhöhung der Drehzahl des Eingangswalzenpaares 214 verkleinert werden muss. Wird nun wie im unteren Diagramm in Fig. 8 gezeigt, die Basisdrehzahl des Motors 25 auf U2 abgesenkt, so wird die über den Regelmotor 29 ausgelöste Drehzahlerhöhung gegenüber dem Walzenpaar 215 fast vollständig kompensiert. Dies ist insbesondere aus der Darstellung der unteren zwei Kurven der Fig. 8 zu entnehmen, wobei die untere Kurve die Drehzahlveränderung des Eingangswalzenpaares 214 in Bezug auf eine gleichbleibende Drehzahl des Walzenpaares 215 gezeigt ist. Daraus ist zu entnehmen, dass die zum Zeitpunkt T1 von dem Sensor 210 erfasste Massenverringerung des gelieferten Faserbandes zu einer Erhöhung der Drehzahl U14 der Walze 214 gegenüber dem Walzenpaar 215 führt, um durch Herabsetzung des Verzuges diese Dünnstelle auszugleichen. Befindet sich das Signal des Füllstandssensors 218 noch innerhalb eines vorgegebenen Toleranzbereiches, so wird kein zusätzliches Steuersignal zur weiteren Beeinflussung der Basisdrehzahl erzeugt. Durch die gleichzeitige Herabsetzung der Basisdrehzahl U1 des Motors 25 wird diese Drehzahlveränderung der Walze 214 annähernd kompensiert, d.h. das gesamte Drehzahlniveau des Streckwerks 213 wird durch die antriebsmässige Verknüpfung gleichmässig heruntergefahren, so dass trotz Veränderung des Drehzahlverhältnisses zwischen den Walzenpaaren 214 und 215 die jetzt vorhandene Drehzahl des Eingangswalzenpaares sich etwa wieder auf demselben Niveau befindet, das vor dem Regeleingriff bestanden hat. Dadurch wird ermöglicht, dass die Einzugsgeschwindigkeit des Faserbandes F auch nach einem durchgeführten Regeleingriff und der Veränderung des Drehzahlverhältnisses etwa auf gleichbleibendem Niveau bleibt. Dadurch ist es möglich, dass der Faserbandspeicher 211 lediglich die kurzwelligen Regeleingriffe ausgleichen muss, wobei die langwelligen Abweichungen durch Veränderung der Basisdrehzahl des Motors 25 ausgeglichen werden. Der Sensor 218 dient dabei lediglich als zusätzliche Überwachungshilfe. Aus Übersichtlichkeitsgründen wurde bei der Kurve der Walze 214 auf die Darstellung der Ausschläge, welche durch die kurzwelligen Ausregulierungen entstehen, verzichtet. Diese kurzwelligen Ausregulierungen pendeln in der Regel um die eingezeichnete Kurve nach oben oder unten.

Durch die Absenkung der Basisdrehzahl wird auch die Drehzahl der Antriebselemente der Kannenablage synchron abgesenkt, wodurch das Drehzahlverhältnis zwischen der Lieferwalze 216 und den Kalanderwalzen 234 aufrechterhalten bleibt. Dieser Ausgleich der langwelligen Abdriftungen der Faserbandmasse kann relativ sanft und langsam durchgeführt werden, so dass auch die Nachführung der relativ trägen Elemente der Kannenablage KA keine Probleme bereitet.

Mit der vorgeschlagenen Einrichtung kann einerseits mit bereits bekannten Sensoreinrichtungen rechtzeitig auf langwellige Abweichungen in der Faserbandmasse reagiert werden und andererseits der für die Regulierung am Eingang des Streckwerks benötigte Faserbandspeicher auf einem Minimum gehalten werden.

Es wird nun zusätzlich vorgeschlagen, das Faserband F mit einer Feinheit (Bandnummer) höher als 8 ktex, vorzugsweise zwischen 10 und 12 ktex herzustellen. Dazu muss die Karde nach Fig. 7 eine ausreichend hohe Fasermasse verarbeiten und liefern können, was dadurch realisiert werden kann, dass die Karde mit einer relativ grossen Arbeitsbreite (z.B. grösser als 1200 mm) versehen wird. Eine solche Karde ist als Modell KU 12 (_{"}Superkarde") der Fa. Schubert & Selzer geliefert worden (siehe z.B. das Fachbuch _{"}High Speed Carding and Continuous Card Feeding", Autor: Zoltan S. Szaloki, Seiten 72 bis 75). Eine Alternative ist in CH 2318/97 der Anmelderin erwähnt, wovon der Gesamtinhalt schon als Bestandteil dieser Anmeldung eingefügt worden ist.

Weiter weist das Streckwerk 213 bzw. das Streckwerk 2, Fig. 4, (ob geregelt oder mit fest vorgegebenem Verzug) einen Gesamtverzug GV von mehr als 2 und vorzugsweise 3 bis 6. Dabei kann der mittlere Verzug in einem geregelten (variablen) Verzugsfeld (zwischen den Walzenpaaren 214 und 215 in Fig. 7) z.B. ca. 2,5 betragen, der Verzug im anderen (fest eingestellten) Verzugsfeld (zwischen den Walzenpaaren 215 und 216 in Fig. 7) z.B. ca. 1,2 betragen. In den Varianten nach Fig. 7 und 8 ist das erste Verzugsfeld zum Erzeugen des variablen Verzugs konzipiert. Dies ist aber nicht wesentlich - eine Alternative ist in CH 0153/97 vom 23.1.97 aufgeführt. In dem Fall kann der "Vorverzug" (im ersten Verzugsfeld) ca. 1,1 bis 1,5 (vorzugsweise 1,2) betragen und der _{"}Hauptverzug" (im zweiten, variablen Verzugsfeld) ca. 2,0 bis 4 (vorzugsweise 2,5) betragen.

Die Faserbandstärke am Auslauf des Streckwerks beträgt vorzugsweise 3 bis 5 ktex, beispielsweise 3.5 ktex. Das Streckwerk ist vorzugsweise direkt oberhalb des Trichterrades einer Bandablage angeordnet, beispielsweise wie dies in DE-Gbm-296 22 923 gezeigt wird. Das in der Kanne abgelegte Faserband kann direkt an die OE-Spinnmaschine, beispielsweise nach EP-A-627 509 geliefert werden.

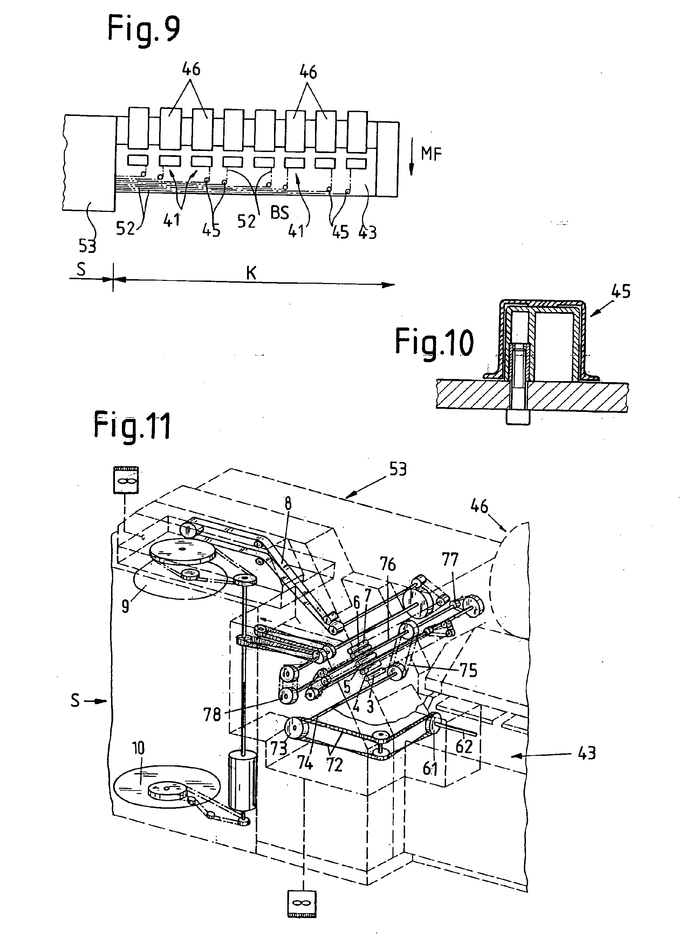

Fig. 9 zeigt schematisch in Plan eine Kämmaschine mit einer Reihe von Kämmköpfen 41, die je ein Kammzugband 52 auf einen gemeinsamen Auslauftisch 43 abgeben. Für jeden Kämmkopf 41 ist eine jeweilige Vorlage in der Form eines sogenannten Wattewickels 46 vorhanden. Die Watte (nicht speziell gezeigt) wird aus dem jeweiligen Wickel (durch Abrollen des Wickels) entnommen, im jeweiligen Kämmkopf 41 gekämmt und als gekämmtes Band 52 aus dem Kämmkopf geliefert, wobei der Materialfluss in Richtung des Pfeils MF läuft. Für jeden Kämmkopf ist auf dem Auslauftisch 43 jeweils ein Bandführer 45 angeordnet, der das betreffende Kammzugband 52 in die Längsrichtung des Auslauftisches umlenkt. Die umgelenkten Kammzugbänder 52 laufen dann gemeinsam zu einem Streckwerk, das in einem Gehäuseteil 53 untergebracht ist, wie nachfolgend anhand der Figur 6 näher erklärt wird. Einer der Bandführer 45 ist in Fig. 10 zu einem grösseren Massstab dargestellt, es wird aber für die zutreffenden Einzelheiten auf EP-A-349 866 hingewiesen. Die Maschine kann als eine Kombination von zwei Einheiten (oder _{"}Baugruppen") betrachtet werden, nämlich einer Kämmeinheit K und einer Streckwerkseinheit S. Letztere Einheit umfasst eine Bandablage.

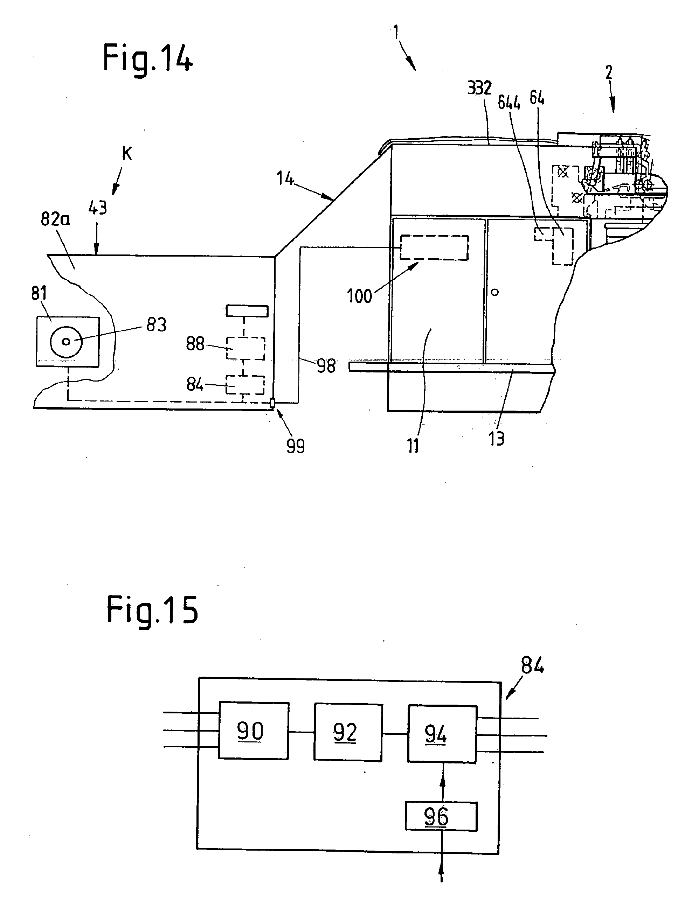

Eine Maschine nach Fig. 9 wird konventionell von der Längsseite BS bedient, d.h. falls ein Problem zu beheben ist, erhält die Bedienungspersonal den Zugang z.B. zu einem Kämmkopf 41 von der Seite BS. Die Vorlagewickel 46 werden von der anderen Maschinenseite zugeführt bzw. ersetzt. Aus Fig. 14 wird daher klar, dass sich die Kammzugbänder 52 von rechts nach links in das Streckwerk einlaufen, wenn die Maschine von der Bedienungsseite BS betrachtet wird.

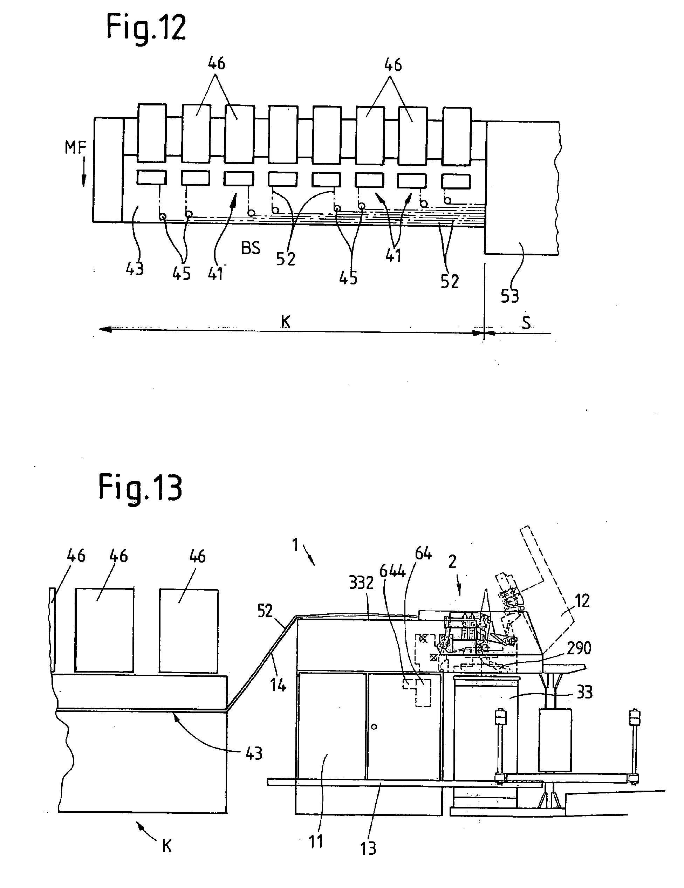

Fig. 11 zeigt einen Antrieb für das vorerwähnte Streckwerk der Kämmaschine, wobei das Gehäuse der Maschine mit unterbrochenen Linien angedeutet und einen Teil des _{"}letzten" Wattewickels 46 (in der Nähe des Gehäuses 53) gezeigt ist. Die Antriebswelle der Kämmköpfe 41 (in Fig. 11 abgedeckt) ist mit dem Bezugszeichen 62 angedeutet.

Die von den Kämmköpfen 41 abgegebenen Bänder 52 aus gekämmten Fasermaterial werden gemeinsam einem Streckwerk zugeführt, von welchem lediglich fünf Unterwalzen 3,4,5,6 und 7 dargestellt sind. Mit diesen Walzen arbeiten drei nicht dargestellte Druckwalzen zusammen. Die Walzen 3,4,5,6,7 sind horizontal und rechtwinklig zur Längsrichtung der Reihe von Kämmköpfen 41 verlaufend angeordnet.

Das vom Streckwerk 3,4,5,6,7 abgegebene Vlies wird in Bandform auf einem Transportband 8 zu einem Trichterrad 9 transportiert, das um eine vertikale Achse drehbar ist. Das Trichterrad 9 legt das Faserband in eine Kanne (nicht dargestellt) ab, die im Betrieb auf einem Kannenteller 10 steht, welcher ebenfalls um eine vertikale Achse drehbar ist.

Auf der den Kämmköpfen 41 zugeordneten Antriebswelle 62 sitzt ein Zahnrad 61, das über einen ersten Winkeltrieb mit einem ersten, um zwei Umlenkrollen gelegten geschränkten Zahnriemen 72 mit einem Zahnrad 73 gekuppelt ist, welches auf einer zu den Streckwerkswalzen 3,4,5,6,7 parallelen Streckwerk-Antriebswelle 74 sitzt. Die Welle 74 treibt über einen weiteren Zahnriemen 75 eine zweite zu den Streckwerkswalzen 3,4,5,6,7 parallele Welle 76, welche zusätzlich zwei Zahnräder 77 und 78 trägt.

Das Zahnrad 77 treibt über weitere Übertragungselemente sowohl die beiden ersten Streckwerkswalzen 3 und 4 als auch die dritten und vierten Streckwerkswalzen 5 und 6. Das Zahnrad 78 auf der Welle 76 treibt über weitere Übertragungselemente sowohl die fünfte Streckwerkswalze 7 als auch das Transportband 8, den Kannenteller 10 und das Trichterrad 9.

Aus Fig. 11 ist ersichtlich, das die Höhe der Bandablage grösser als die Höhe des Auslauftisches 43 ist, so dass die Kämmzugbänder 52 (in Fig. 11 nicht gezeigt) _{"}aufsteigen" müssen, um das Trichterrad 9 zu erreichen. Die Verzugsfelder des Streckwerkes erstrecken sich deshalb schräg nach oben, wobei die Transportbänder 8 sich ebenfalls vorerst nach oben erstrecken müssen.

Fig. 12 zeigt auch im Plan eine Kämmaschine, wobei sich die schon in Fig. 14 verwendeten Bezugszeichen in Fig. 12 auf die gleichen Elemente beziehen. Der einzige Unterschied zwischen der Anordnung nach Fig. 14 und derjenigen nach Fig. 12 liegt daher darin, dass der Materialfluss auf dem Tisch 43 von links nach rechts (von der Seite BS betrachtet) läuft. Die Gesamtmaschine kann wiederum als eine Kombination einer Kämmeinheit K mit einer Streckwerkseinheit S betrachtet werden, wobei die Einheit S eine Bandablage umfasst.

Fig. 13 zeigt nun eine Ausführung der Erfindung in der Form einer Kombination einer Kämmeinheit K nach Fig. 12 mit einer Strecke 1 (ohne Kannengatter) nach Fig. 2. Eine Rampe 14 leitet die Bänder 52 vom Auslauftisch 43 der Einheit K auf den Einlauftisch 332 der Strecke 1 über. Somit ist es möglich, die gleiche Baugruppe der Strecke sowohl für die Strecke selbst als auch für die Karde und für die Kämmaschine zu verwenden. Die Materialflussrichtung der Kämmeinheit K ist dabei derart an derjenigen der Strecke angepasst, dass die beiden Einheiten nun eine gemeinsame Bedienungsseite aufweisen.

Fig. 14 zeigt nun schematisch eine Variante, wobei das Bezugszeichen 82a auf die Verschalung einer Endpartie der Kämmeinheit K deutet und auf den Antrieb für die Kämmköpfe 41 (in Fig. 14 nicht gezeigt) mit dem Bezugszeichen 81 hingewiesen wird. Es wird hierbei auf das Ausführungsbeispiel der Fig. 5 und 6 bei einer Karde verwiesen, wo für gleiche Elemente gleiche Bezugszeichen verwendet wurden.ln einer kostengünstigen Ausführung umfasst dieser Antrieb 80 einen stufenlos steuerbaren, wartungsfreien Asynchronmotor 83 (z.B. einen Kurzschlussläufermotor), der mittels eines Frequenzumrichters 84 mit elektrischen Energie gespeist wird. Die Ausgangsfrequenz des Umrichters 84 ist über ein Eingabegerät 86 einstellbar, das in einer programmierbaren Steuerungseinheit 88 der Kämmaschine integriert ist. Eine solche Anordnung ist heutzutage allgemeiner Stand der Technik für die Kämmaschine, d.h. die Elemente 81,83,84,86 und 88 (oder ihre Äquivalente) sind für eine moderne Kämmaschine nahezu unerlässlich. Der Umrichter 84 umfasst normalerweise einen Gleichrichter 90 (Fig. 15), der Wechselstrom von einem 3-Phasen Netz erhält und Gleichstrom an einen Zwischenkreis 92 liefert. Ein steuerbarer Leistungsteil 94 wandelt Gleichstrom aus dem Zwischenkreis 92 in Wechselstrom mit einer Frequenz, die von einer Umrichtersteuerung anhand eines Signals von der Einheit 88 bestimmt wird. Dieses Wechselstrom (einphasig oder dreiphasig) wird dem Motor 83 gespeist.

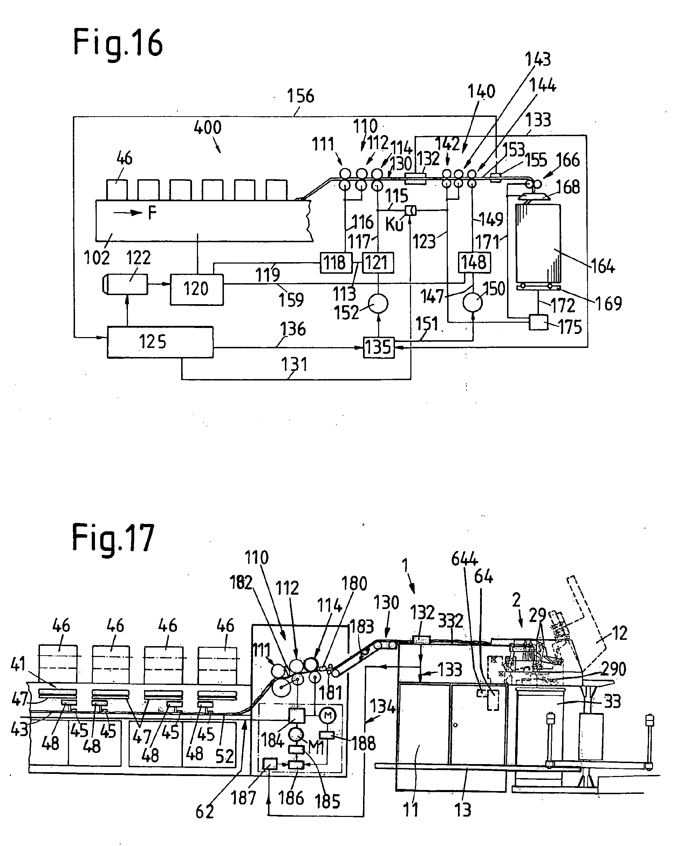

Die Synchrondrehzahl des Motors 83 wird eindeutig durch die Ausgangsfrequenz des Frequenzumrichters 84 vorgegeben. Die effektive Drehzahl der Motorwelle wird aber nicht allein in Abhängigkeit von dieser Synchrondrehzahl bestimmt. Diese Drehzahl hängt auch von der Last ab, welcher der Motor unterworfen ist, d.h. im Motor 83 entsteht zwischen dem Rotor und dem Stator ein sogenannter "Schlupf'. Diese Tatsache allein würde zu gar keinem Problem führen, wenn der Schlupf voraussehbar wäre. Obwohl der Schlupf nicht kontrollierbar ist, kann das "Schlupfverhalten" (d.h. der Verlauf der Änderungen des Schlupfes in Abhängigkeit von Laständerungen) sowohl in der Richtung wie auch in der Grössenordnung geschätzt werden. Der Frequenzumrichter 84 wird normalerweise derart ausgelegt, dass er imstande ist, das Streckwerk und die Bandablage 53 (Fig. 12) auch mit der nötigen Energie zu versorgen. Es besteht kein Problem daher, die für eine "autonome" Strecke erforderliche Energie über zum Beispiel eine Steckdose 99 der Verschalung 82a vom Ausgang des Umrichters abzuzweigen und über einen Kabel 98 an einen Antriebsmotor 100 der Strecke 1 zu speisen. Der Motor 100 ist ein einfacher Drehstromgetriebemotor, der ähnlich dem Motor 83 direkt anhand der vom Frequenzumrichter erhaltenen Energie gesteuert wird. Der Verzug im Streckwerk 2 ist in diesem Fall fest vorgegeben aber allenfalls einstellbar. Verzugsänderungen können durch Wechselräder in den Getrieben bewerkstelligt werden. Fig. 16 zeigt eine aus EP-A-799 916 bekannte Kämmaschine mit einem geregelten Streckwerk. In Fig. 16 ist der Längsteil 102 der Kämmaschine 400 gezeigt, auf welchem Wattewickel 46 zum Abrollen und Auskämmen durch nachfolgende Kämmeinrichtungen aufliegen. In der Regel sind acht solcher Wickel auf einer Kämmaschine zum Abrollen vorgelegt. Die bei den einzelnen Kämmköpfen gebildeten Faserbänder werden auf dem Längsteil 102 zu einem Faserbandverbund zusammengefasst und in Förderrichtung F einem ersten Streckwerk 110 zugeführt. Die von den einzelnen Kämmköpfen abgegebenen Faserbänder weisen in der Regel eine Nummer, bzw. Faserbandmasse von 8 g/m auf, wodurch der Faserbandverbund aus acht Faserbändern mit einer Masse von 64 g/m vorliegt. Diese Fasermasse wird im Streckwerk 110 z.B. einem fünffachen Verzug unterworfen, wodurch die aus dem Streckwerk 110 abgegebene Fasermasse auf etwa 12 g/m reduziert wird.

Das Streckwerk 110 ist mit einem bekannten Vorverzug zwischen den Streckwerkswalzenpaaren 111 und 112 ausgestattet. Der Hauptverzug erfolgt zwischen den Streckwerkswalzenpaaren 112 und 114. Die Verzugsverhältnisse (Vorverzug) zwischen den Streckwerkswalzen 111 und 112 sind fix eingestellt, während der Hauptverzug zwischen den Walzen 112 und 114 über eine Reguliereinrichtung entsprechend dem Signal eines nachfolgenden Messorgans 132 geregelt wird. Die Streckwerkswalzen 111 und 112 werden über einen schematisch dargestellten Antriebsstrang 116 durch ein Getriebe 118 mit festen Übersetzungsverhältnissen angetrieben. Das Getriebe 118 ist über den Antriebsstrang 119 mit einem Hauptgetriebe 120 verbunden, welches durch einen Motor 122 angetrieben wird. Der Motor 122 wird über eine Steuereinheit 125 angesteuert. Die Ausgangswalzen 114 des Streckwerks 110 werden über den Antriebsstrang 117 von einem Differentialgetriebe 121 angetrieben, welches mit dem Getriebe 118 über den Antriebsstrang 113 verbunden ist. Zur Durchführung des Regeleingriffes (Änderung des Hauptverszuges) ist das über den Antriebsstrang 113 mit einer konstanten Drehzahl angetriebenen Differentialgetriebe durch einen Regelmotor 152 übersteuerbar. Der Regelmotor 152 erhält dabei seine Steuerimpulse von einer Steuereinheit 135, welche anhand eines vorgegebenen Sollwertes im Vergleich mit dem vom Messorgan 132 ermittelten Ist-Wert (Fasermasse) angesteuert wird.

Das aus dem ersten Streckwerk 110 austretende Faservlies 128 wird zu einem Faserband 130 zusammengefasst und dem Messorgan 132 zugeführt. Der Querschnitt des gebildeten Faserbandes 130 kann eine runde, eine ovale oder auch eine rechteckige Form aufweisen, wobei auch noch andere Formen möglich wären. Das Messorgan 132 kann entweder von mechanischer Bauweise sein (z.B. Nutenwalzen) oder auf elektronischer Abtastbasis funktionieren. Derartige Messorgane sind in verschiedenen Ausführungsvarianten bereits aus dem bekannten Stand der Technik zu entnehmen. Über einen Pfad 133 wird das Signal des Messorganes 132 einer Steuereinheit 135 zugeführt, welche über einen Pfad 136 mit der Steuereinheit 125 verbunden ist. Die Steuereinheit 135 könnte auch direkt in der Steuereinheit 125 integriert sein.

Das vom Messorgan 132 abgegebene Faserband 130 wird einem weiteren Streckwerk 140 zugeführt, welches mit einer Reguliereinrichtung versehen ist. Dabei besteht das Streckwerk 140 aus einem Eingangswalzenpaar 142, das mit einem Walzenpaar 143 einen fest eingestellten Vorverzug ausführt. Über einen Antriebsstrang 115, eine Kupplung KU und einen Antriebsstrang 123 erfolgt der Antrieb dieser beiden Walzenpaare durch das Differentialgetriebe 121. Über die detaillierte Darstellung von entsprechend notwendigen mechanischen Übersetzungen wurde aus Übersichtlichkeitsgründen verzichtet. Durch diese Antriebsverbindung wird gewährleistet, dass die Drehzahl des Ausgangswalzenpaares 114 des ersten Streckwerkes 110 und des Eingangswalzenpaares 142 des Streckwerkes 140 aufeinander abgestimmt sind, so dass beide Walzenpaare annähernd mit gleicher Umfangsgeschwindigkeit umlaufen. D.h., zwischen diesen beiden Walzenpaaren 114 und 142 besteht eine mechanische Kopplung, die den Gleichlauf gewährleistet. Ein gewisser Anspannverzug zwischen den beiden Walzenpaaren 114 und 142 kann vorhanden sein. Über einen Antriebsstrang 159 wird ein Differentialgetriebe 148 vom Getriebe 120 angetrieben, welches wiederum über einen Antriebsstrang 149 das Ausgangswalzenpaar 144 des Streckwerkes 140 antreibt. Zur Durchführung eines Regeleingriffes ist das Differentialgetriebe 148 über einen Antriebsstrang 147 mit einem Regelmotor 150 verbunden, welcher in den Antrieb des Differentialgetriebes 148 regulierend eingreifen kann. Das heisst, der Antrieb über den Antriebsstrang 149 wird entsprechend korrigiert, bzw. übersteuert.

Der Regelmotor 150 erhält seine Steuerimpulse über dem Pfad 151 von der Steuereinheit 135, über welche die bereits beschriebene Verarbeitung des Messignales der Messeinrichtung 132 erfolgt. Dabei wird versucht, die kurzwelligen Massenschwankungen (z.B. Lötstellen) auszugleichen und die Abweichungen gegenüber einem vorgegebenen Toleranzbereich zu kompensieren. Das heisst, es wird die Herstellung eines gleichmässigen Faserbandes angestrebt. Die Steuereingriffe erfolgen dann, wenn die ermittelten Spitzen der kurzwelligen Massenschwankungen den vorgegebenen Toleranzbereich übersteigen. Das Steuersignal wird dann über dem Pfad 151 von der Steuerung 135 an den Regelmotor 150 abgegeben. Das vom Streckwerk 140 abgeführte Faserband 153 wird durch ein Messorgan 155 geführt, welches über einen Pfad 156 mit der Steuereinheit 125 verbunden ist. In diesem Messorgan wird nochmals eine Überwachung der Fasermasse des Faserbandes vorgenommen und bei Abweichung von einem Sollwert die Maschine abgestellt. Derartige Messorgane sind ebenfalls bekannt und aus dem Stand der Technik zu entnehmen. Das Faserband 153 wird anschliessend zu einer Ablagevorrichtung überführt und mittels entsprechenden Aggregaten in eine Kanne 164 abgelegt. Bei diesen Aggregaten handelt es sich zum Beispiel um ein Kalanderwalzenpaar 166, welches das Faserband an ein Trichterrad 168 abgibt. Vom Trichterrad aus gelangt das Faserband in die Kanne 164 und wird dort schlaufenartig abgelegt. Das Kalanderwalzenpaar 166, das Trichterrad 168 und ein Kannenantriebssteller 169 werden über die Antriebsstränge 171, bzw. 172 durch ein Zwischengetriebe 175 angetrieben. Das Zwischengetriebe 175 ist über die Antriebsstränge 123, 115 und 117, sowie über die Kupplung KU mit dem Getriebe 121 verbunden. Durch diese antriebsmässige Verbindung folgt der Antrieb der Ablegevorrichtung 166,168,169 der veränderlichen Drehzahl des Differentialgetriebes 121. Dadurch ist eine kontinuierliche Ablage des Faserbandes möglich, ohne die Anbringung von aufwendigen und anfälligen Zwischenspeichern.

Wie bereits vorher beschrieben, weist das im Anschluss an das Streckwerk 110 gebildete Faserband eine Fasermasse von 12 g/m auf. Der Verzug im nachfolgenden Regulierstreckwerk 140 ist so ausgebildet, so dass das in die Kanne 164 abgelegte Faserband ca. eine Masse von 5 g/m aufweist.

Fig. 17 zeigt nun eine Weiterentwicklung der Maschine nach Fig. 16, um eine Kombination nach der vorliegenden Erfindung zu bilden. Grundsätzlich wird dabei von einer Kämmaschine mit einem geregelten Streckwerk nach EP-A-376 002 ausgegangen. Fig. 17 zeigt eine Kämmaschine mit z.B. acht Kämmköpfen 41, wovon in der Darstellung nur vier gezeigt sind. Jedem Kämmkopf 41 ist ein jeweiliger Wattewickel 46 zugeordnet, dessen Watte über eine nicht näher aufgezeigte Speiseeinrichtung den Kämmvorrichtungen 41 zugeführt wird. Die Kämmvorrichtung 41 ist nicht näher aufgezeigt und kann, wie allgemein bekannt, aus einem Zangenaggregat, einem unterhalb diesem angebrachten Rundkamm und einem, bezogen auf die Förderrichtung, hinter dem Zangenaggregat angeordneten Fixkamm mit anschliessenden Abreisswalzen bestehen.

Das von den Abreisswalzen abgegebene ausgekämmte Faservlies gelangt über einen Abzugstisch 47 in einen nicht näher aufgezeigten Abzugstrichter. Beim Abzugstrichter wird das Faservlies zu einem Faserband, bzw. Kammzugband, zusammengefasst. Dieser Vorgang wird unterstützt durch ein dem jeweiligen Abzugstrichter nachgeordneten Abzugswalzenpaar 48, welches das Kammzugband an den Auslauftisch 43 abgibt. Um die Faserbänder 52 nebeneinander auf dem Auslauftisch 43 weiter zu fördern, sind Bandführer 45 vorgesehen, die in horizontaler Richtung zueinander versetzt sind. Die parallel zueinander geführten Faserbänder 52 gelangen zu einem Streckwerk 110 mit Eingangswalzen 111 einer Vorverzugszone, die durch ein Mittelwalzenpaar 112 begrenzt wird. Walzenpaar 112 dient als Zuführwalzen für eine nachfolgende Hauptverzugszone. Über die Lieferwalzen 114 am Ausgang des Hauptverzugsfeldes gelangen die verstreckten Bänder in einen schematisch dargestellten Bandtrichter 180 und werden dort zu einem Kammzugband 130 unter Zuhilfenahme der Abzugswalzen 181 zusammengefasst. Zur Führung der Fasern ist im Vorverzugsfeld ein Druckstab 182 angebracht. Dieser Druckstab 182 könnte auch im Hauptverzugsfeld angeordnet sein.

Das von den Abzugswalzen 114 abgegebene Kammzugband 130 gelangt auf ein Förderband 183, welches das Band direkt an den Einlauftisch 332 einer Streckenbaugruppe nach Fig. 3 liefert. Der Einlauftisch 332 ist in diesem Fall mit einem Banddikkenmesssensor 132 (vgl. Fig. 16) versehen. Der Sensor 132 liefert ein einziges Messignal, das aber als ein Kompositsignal mit im wesentlichen zwei _{"}Signalteile" betrachtet werden kann, nämlich ein erster Teil, welcher der Bandnummer entspricht, und ein zweiter Teil, welcher den kurzzeitigen Banddickenschwankungen entspricht. Letzterer Teil enthält Signalkomponenten, welche aus den sogenannten Lötungen entstehen, die beim Kämmen erzeugt werden. Durch das auf dem Tisch 43 erfolgte Doublieren der Bänder 52 ist die Wirkung der Lötungen auf die Bandgleichmässigkeit reduziert, aber nicht eliminiert, worden.

Die Strecke 1 ist in diesem Fall eine Regelstrecke, d.h. sie weist einen variablen Verzug auf, wobei der Verzug in Abhängigkeit vom Ausgangssignal des Sensors 132 geändert werden kann, um die Gleichmässigkeit des Faserbandes am Ausgang vom Streckwerk 2 gegenüber der Vorlage zu verbessern. Wie schematisch mit der Verbindungsleitung 133 angedeutet ist, wird das Ausgangssignal des Sensors 132 an die Regeleinrichtungen (nicht gezeigt) der Streckenbaugruppe 1 geliefert, wobei diese Einrichtungen eine geeignete Auswertung umfassen, um die zutreffenden Signalkomponenten in Steuersignale für den Streckwerkantrieb umzuwandeln. Darauf wird hier nicht eingegangen, weil die geeigneten Mitteln z.B. in der RSB-Strecke von Rieter Ingolstadt bekannt und ohne Aenderung einsetzbar sind. Die Regelung kann insbesondere derart ausgelegt werden, dass sie kurzperiodische Banddickenschwankungen ausgleicht.

Das Streckwerk 110 ist aber auch mit einer Regeleinrichtung versehen, die über die Verbindungsleitung 134 mit dem Ausgangssignal des Sensors 132 beliefert wird. Der Antrieb der unteren Walzen der Walzenpaare 111,112 und 114 erfolgt von dem Hauptmotor M, wobei für den Antrieb der unteren Walze 112 ein Planetengetriebe 184 zwischengeschaltet ist und der Antrieb der Unterwalze 111 direkt von der Unterwalze 112 abgenommen wird. Dem Planetengetriebe 184 ist ein Regelmotor M1 zugeordnet, der über ein Steuergerät 185 angesteuert wird. Das Steuergerät 185 erhält Impulse von einer Sollwertstufe 186, worin das durch die Messeinrichtung 132 über einen Signalwandler 187 gelieferte Messsignal mit einem vom Leittacho 188 des Hauptmotors M abgegebenen Leitsignal verglichen wird. Aus dem Vergleich wird ein Sollwert für das Steuergerät abgeleitet.

Wird durch die Messeinrichtung 132 ein Unterschied in der Sollwert-Banddicke ermittelt, so wird über die Regeleinrichtung der Regelmotor M1 beaufschlagt, der in das Planetengetriebe eingreift und eine Drehzahländerung der Mittelwalze 112 und somit auch der Eingangswalze 111 bewirkt, während die Lieferwalze 114 eine unveränderte Drehzahl besitzt. Das heisst, der Verzug wird infolge des geänderten Drehzahlunterschiedes zwischen Mittelwalze 112 und Lieferwalze 114 der ermittelten Banddicke durch die Messeinrichtung 132 angepasst. Diese Regelung reagiert aber nur auf langperiodischen Änderungen in der Banddicke, d.h. sie dient der Bandnummerhaltung bzw. dem Ausgleich von Drift-Erscheinungen. Der Regelantrieb für das Streckwerk 110 muss sich deshalb nur relativ langsam auf Banddickenänderungen anpassen.

Es ist deshalb möglich, den Regelantrieb des Streckwerkes mit der Antriebswelle 62 (vgl. Fig. 16) für die Kämmköpfe zu verbinden, d.h. die Arbeitsgeschwindigkeit der Kämmeinheit K als ganzes kann zum Erzeugen eines variablen Verzuges im Streckwerk 110 geändert werden. Dies ist in Fig. 17 schematisch durch einer Verbindung der Welle 62 mit dem vorerwähnten Planetengetriebe 184 angedeutet, wobei das Antriebskonzept im Falle der Integration des Maschinenantriebes überarbeitet werden kann.

Durch das Zusammenfassen der Faserbänder 52 zu einem nach der gewünschten (vorgegebenen) Bandnummer geregelten Faserband 130 ist es möglich, die (Baugruppe der) Strecke 1 auf die kurzperiodischen Schwankungen auszurichten. Dadurch wird auch das Erkennen der sehr kurzen Schwankungen vereinfacht, die durch die Lötungen verursacht werden. Es könnte zu diesem Zweck zwei Sensoren vorgesehn, wobei ein Sensor mit der Regeleinrichtung des Streckwerkes 110 und der andere mit der Regeleinrichtung der Streckenbaugruppe verbunden ist. Der erstgenannte Sensor kann dann zum Erkennen von Bandnummerschwankungen und der Zweite zum erkennen vom kurzperiodischen Schwankungen ausgelegt werden.

## Patentansprüche

1. Kämmaschine (K) mit wenigstens einer Faserbandbildenden Einrichtung (41) und einer Bandablage und wenigstens einem Streckwerk (110) zwischen der Bandbildenden Einrichtung und der Bandablage **dadurch gekennzeichnet, dass** zumindest die Bandablage durch eine Baugruppe einer Strecke (1,S) zum Doublieren und Verstrecken von Faserbändern (52,130) gebildet ist, wobei die Baugruppe auch das Streckwerk (2) der Strecke (S) umfasst.

2. Kämmaschine (K) nach Anspruch 1, **dadurch gekennzeichnet, dass** die Baugruppe ein Streckwerk (2) mit einer Liefergeschwindigkeit höher als 400 m/min umfasst.

3. Kämmaschine (K) nach einem der Ansprüche 1 bis 2, **dadurch gekennzeichnet, dass** das Streckwerk (2) der Baugruppe als Vergleichmässigungsaggregat gebildet ist.

4. Kämmaschine (K) nach einem der Ansprüche 1 bis 3, **dadurch gekennzeichnet, dass** der Vorlagetisch (332) der Strecke (S) mit mindestens einem Bandleitelement für ein einziges Faserband (52, 130) versehen ist.

5. Kämmaschine (K) nach einem der Ansprüche 1 bis 4, **dadurch gekennzeichnet, dass** die Materialflussrichtungen (F) der Kämmeinheit (K) und der Strecke derart aneinander angepasst sind, dass die Kombination eine gemeinsame Bedienungsseite aufweist.

6. Kämmaschine (K) nach einem der Ansprüche 1 bis 5, **dadurch gekennzeichnet, dass** die Faserbandbildende Einrichtung ein erstes Streckwerk (110) umfasst, welches ein Faserband (130) an das Streckwerk (2) der Baugruppe (1) liefert.

7. Kämmaschine (K) nach Anspruch 8, **dadurch gekennzeichnet, dass** das erste Streckwerk (110) dem Antrieb der Kämmeinheit (400) zugeordnet ist.

8. Kämmaschine (K) nach einem der Ansprüche 6 bis 7, **dadurch gekennzeichnet, dass** zwischen dem ersten Streckwerk (110) und dem Streckwerk (2) der Baugruppe (1) ein angetriebenes Transportmittel, z.B. ein Transportband (183) vorgesehen ist.

9. Kämmaschine (K) nach einem der Ansprüche 1 bis 5, **dadurch gekennzeichnet, dass** das Streckwerk (2) der Baugruppe (1) zum Verstrecken eines aus mehreren Faserbändern (52) gebildeten Vlies ausgelegt ist.

10. Kämmaschine (K) nach Anspruch 9, **dadurch gekennzeichnet, dass** dem Streckwerk (2) der Baugruppe (1) Infrastruktureinrichtungen (z.B. Antriebs- bzw. Absaugeinrichtungen) zugeordnet sind, die ebenfalls zum Verstrecken von einem Vlies geeignet sind.

11. Kämmaschine (K) nach Anspruch 9, **dadurch gekennzeichnet, dass** eine Vliesüberleitrampe (14) zwischen einem Auslauftisch der Kämmeinheit (K) und einem Einlauftisch (332) der Streckenbaugruppe (2) vorgesehen ist.

12. Kämmaschine (K) nach Anspruch 11, **dadurch gekennzeichnet, dass** die Vliesüberleitrampe (14) durch ein angetriebenes Transportmittel, z.B. ein Transportband (183) gebildet wird.

13. Kämmaschine (K) nach Anspruch 1, **dadurch gekennzeichnet, dass** der Antrieb (81) der Kämmaschine (K) und wenigstens der Antrieb (100) des Streckwerkes (2) der Strecke (1) mindestens je einen frequenzgesteuerten Drehstrommotor (83,100) aufweisen und zum Speisen dieser Motoren ein gemeinsamer Frequenzumrichter (84) vorgesehen ist.
